# EUROPÄISCHE PATENTSCHRIFT

(11) **EP 2 848 888 B1**
(45) Veröffentlichungstag und Bekanntmachung des Hinweises auf die Patenterteilung: **02.05.2018**
(21) Anmeldenummer: 14184245.0
(22) Anmeldetag: 10.09.2014
(51) Int. Cl.: F41G 1/38, G02B 7/02, G02B 23/16

(54) **Verstellturm mit einem Mechanismus zur Überwindung der Anschlagstellung**
Adjustment turret with mechanism allowing an override of the zero-stop
Tour de réglage avec mécanisme permettant la suppression du 'zero-stop'

(30) Priorität: 11.09.2013 AT 505682013
(43) Veröffentlichungstag der Anmeldung: 18.03.2015
(73) Patentinhaber: Swarovski-Optik KG., 6067 Absam (AT)
(72) Erfinder: Ingenito, Mario, 6222 Gallzein (AT)
(74) Vertreter: Burger, Hannes

(56) Entgegenhaltungen:
- WO-A2-2007/108896
- WO-A2-2010/008810
- DE-A1-102006 016 834
- DE-A1-102011 013 456
- US-A1- 2013 167 425

## Beschreibung

Die Erfindung bezieht sich auf einen Verstellturm für ein fernoptisches Gerät, insbesondere Zielfernrohr, gemäß dem Oberbegriff des Anspruch 1 sowie auf ein fernoptisches Gerät.

Die WO 2010/008810 A2 offenbart eine Stelleinrichtung für eine optische Vergrößerungseinrichtung gemäß dem Oberbegriff des Anspruchs 1. Ein Drehknopf kann dabei bis zu einem Anschlag verdreht werden. Um die Drehung fortsetzen zu können muss der Benutzer einen release button betätigen, um die Anschlagposition zu überwinden. Der release button ist innerhalb des Drehknopfes angeordnet.

Die US2013167425A1 offenbart eine Stelleinrichtung mit einem Drehknopf und einem im Drehknopf eingelassenen Button zur Betätigung durch einen Benutzer. Mittels dieses Buttons kann der Drehknopf aus einer gesperrten Position herausbewegt werden.

Die DE20301749U1 offenbart eine Stelleinrichtung für ein Zielfernrohr mit einer zwischen einem Deckel und einer Stellkappe gelagerten Anzeigetrommel, die eine zweifärbige Markierung entlang ihres Umfanges aufweist und hinter Sichtfenstern angeordnet ist. Die Anzeigetrommel dreht sich ständig mit der Stellkappe mit. Nur in einer Drehposition der Stellkappe wird die Anzeigetrommel auch relativ zur Stellkappe verdreht. Das relative Verdrehen der Anzeigetrommel erfolgt über einen Steuerstift, der exzentrisch auf einem Pendelzylinder angebracht ist. Der Pendelzylinder ist in einer Exzenterbuchse der Stellkappe drehbar gelagert und mit einem von unten eingreifenden Stellbolzen bewegungsverbunden. Der Stellbolzen fungiert dabei als Mitnehmer. Die Stellkappe kann zwei oder mehr vollständige Umdrehungen ausführen. Die Stellkappe weist entlang ihres Umfanges zwei verschiedene Skalen auf. Die durch die Sichtfenster sichtbaren Farben der Anzeigetrommel geben an, welche Skala auf der Stellkappe aktuell abzulesen ist. Die Skalen werden dabei durch farblich verschiedene Gravuren gebildet.

Der Nachteil einer derartigen Lösung besteht darin, die Umdrehungsanzahl, bei der die Höhenverstellung noch sinnvoll angezeigt werden kann, stark beschränkt ist. Aufgrund der nur zweifarbigen Markierung an der Anzeigetrommel sind überhaupt nur zwei Umdrehungen als solche anzeigbar. Außerdem ist die erforderliche farbliche Zuordnung nicht benutzerfreundlich bzw. kann zu Ablesefehlern führen. Die Sichtfenster sind in konstruktioneller Hinsicht aufwendig und anfällig für Verschmutzungen.

Die DE102011013456A1 offenbart eine Verstelleinrichtung mit einem Drehring, bei dem zwei vollständige Umdrehungen möglich und taktil erfassbar sind. Dazu weist die Verstelleinrichtung einen Führungsstift sowie eine untere und obere Führungsnut auf. Nach einer vollständigen Umdrehung wechselt der Führungsstift durch axiales Verschieben des Drehringes von der unteren in die obere Nut. Das nach-oben-Wandern des Drehringes ermöglicht eine taktile Erfassung in welcher Umdrehung sich der Drehring gerade befindet. Eine taktile Erfassungsmöglichkeit dieser Art ist jedoch nicht immer zuverlässig. Außerdem ist eine derartige Verstelleinrichtung auf zwei vollständige Umdrehungen beschränkt. Das Vorsehen mehrerer übereinander liegender Führungsnuten würde zu einer unverhältnismäßig großen axialen Verschiebung des Drehringes führen, wodurch die erforderliche mechanische Stabilität der Verstelleinrichtung nicht mehr gewährleistet wäre.

Die US6691447B1 offenbart ein Zielfernrohr mit einem Verstellturm, der eine Drehkappe zur Drehbetätigung durch einen Nutzer aufweist. Die Drehkappe ist entlang ihres Umfanges mit einer Skala versehen. Unterhalb der Drehkappe ist eine nicht drehbare weitere Skala vorgesehen, deren Markierungen sich entlang der axialen Richtung des Verstellturmes erstrecken und Informationen über die Anzahl der Umdrehungen der Drehkappe geben. Das Prinzip ähnelt jenem einer Bügelmessschraube. Der Nachteil einer derartigen Lösung besteht darin, dass der Nutzer die aktuelle Umdrehung nur sehr schwer ablesen kann, besonders wenn die Steigung der Spindel klein ist (die Markierungsstriche unterscheiden sich dann nicht sehr in der Höhe voneinander) und in der Dunkelheit. Außerdem kann die Skala nicht auf "0" zurückgestellt werden, da diese in Bezug auf das Zielfernrohr stationär ist.

Die WO2012119574A1 offenbart eine Verstellvorrichtung zum Verstellen der Abseheneinrichtung eines Zielfernrohres. Dabei sind ein zusammen mit der Einstellkappe verdrehbarer Indexring und mehrere Skalenwerte auf einem stationären zweiten Indexring vorgesehen. Nach einer vollständigen Umdrehung werden Skalenwerte des zweiten Indexringes durch axiales Verschieben des ersten Indexringes freigegeben und somit für den Nutzer sichtbar. Dadurch kann die Information über die jeweilige Drehposition der Einstellkappe (auch über eine vollständige Umdrehung hinaus) angegeben werden. Nachteilig ist jedoch die Tatsache, dass der Drehbereich der Einstellkappe auf zwei Umdrehungen beschränkt ist.

Die US2003140545A1 (bzw. US6643970B2) bezieht sich auf einen Anschlagmechanismus zur Realisierung eines sogenannten zero-stop, der der Einstellung der Fleckschussentfernung dient, und offenbart einen "zero-stop" Riflescope Einstellmechanismus. Ein Einstellbolzen ist beidseitig mit einem Gewinde versehen. An der oberen Seite wird ein Stop-Ring aufgeschraubt und über dem Stop-Ring wird zur Einstellung bzw. Fixierung eines "zero-stops" ein Sicherungsring aufgeschraubt. Bei der Einstellung wird zunächst der Einstellbolzen in die gewünschte Position gebracht. Anschließend wird der Stop-Ring soweit aufgeschraubt, dass er an einem Anschlag steht. Der Sicherungsring wird sodann gegen den Stop-Ring geschraubt, wodurch dieser auf dem Einstellbolzen fixiert ist. Zum Schluss wird die Abdeckkappe aufgesetzt und befestigt.

Die sich aus dem Stand der Technik ergebenden Nachteile bestehen im Zusammenhang mit der Einstellung der Visierlinie auf die Fleckschussentfernung (entspricht der individuellen Grundeinstellung für eine bestimmte Waffe, z.B. für 100m) darin, dass entweder ein Unterschreiten der gewünschten Entfernung (z.B. kleiner als 100m) mittels des Verstellturmes nicht möglich ist bzw. ein teilweises Ausbauen und erneutes Justieren des Verstellturmes erfordert, oder die entsprechende Grundeinstellung für den Benutzer überhaupt nicht reproduzierbar bzw. während des Verstellens nicht erkennbar bzw. fühlbar ist.

Das Ziel der vorliegenden Erfindung besteht darin, die Nachteile bislang bekannter Systeme zu beseitigen und einen Verstellturm bereitzustellen, bei dem eine Anschlagstellung, die die Drehbewegung des Drehbetätigungselementes begrenzt, überwindbar ist. Dazu soll eine mechanisch einfache und benutzerfreundliche Lösung zur Anwendung kommen. Das Freigeben der Anschlagstellung soll bevorzugt unabhängig vom Drehbetätigungselement, das der Einstellung der Visierlinie dient, erfolgen.

Dieses Ziel wird mit einem Verstellturm der eingangs genannten Art dadurch er-reicht, dass der Mechanismus ein von außen zugängliches Betätigungselement umfasst, das einen der Anschläge trägt oder mit einem der Anschläge zusammenwirkt und in zumindest einer Drehstellung des Drehbetätigungselementes relativ zur Basis und relativ zum Drehbetätigungselement bewegbar ist, sodass durch eine Betätigung des Betätigungselementes ein Anschlag relativ zum anderen Anschlag verschiebbar ist, wodurch die Anschlagposition überwindbar ist. Das Drehbetätigungselement und das Betätigungselement sind in Richtung der Drehachse übereinander angeordnet. Dies verbessert die Handhabbarkeit durch den Nutzer, da das entsprechende Betätigungselement vom Drehbetätigungselement klar unterscheidbar ist.

Diese Konstruktion gewährleistet, dass die Anschlagposition unabhängig vom Drehbetätigungselement freigegeben werden kann. Das Drehbetätigungselement dient der Einstellung der Visierlinie und wirkt dazu auf ein Aktorelement (üblicherweise ein Gewindespindel, durch die die Drehbewegung in eine lineare Stellbewegung umgesetzt wird). Es erfolgt somit ein Übergang von der Anschlagposition in eine Freigabeposition durch Betätigung eines zusätzlichen Betätigungselementes, das relativ zum Drehbetätigungselement bewegbar ist. Es ist somit nicht erforderlich das Drehbetätigungselement anzuheben, um die Anschlagsposition freizugeben, so wie dies beim Verstellturm aus der DE102011013456A1 der Fall ist. Die Relativbewegung der Anschläge, um von der Anschlagstellung in eine freigebende Stellung zu gelangen, ist von der Bewegung des Drehbetätigungselementes entkoppelt.

Durch die erfindungsgemäße Idee ist es möglich einen Override (Überschreitung) für die Einstellung von insbesondere einem kleineren Entfernungswert in Bezug zu dem Referenz-Entfernungswert (z.B. 100m), dessen Einstellung durch die Anschlagposition definiert ist, zu gewährleisten, ohne die eigentliche Anschlagposition entlang des Umfanges einstellmäßig (durch Aufschrauben des Verstellturmes, Justieren des Anschlages und anschließendem Zusammenbau des Verstellturmes) verändern zu müssen.

Die Drehbewegung des Drehbetätigungselementes wird somit nur vorrübergehend begrenzt: Die Betätigung des Betätigungselementes durch den Nutzer bewirkt eine relative Verschiebung der Anschläge und damit eine Freigabe der Anschlagposition. Das Drehbetätigungselement ist anschließend weiter verdrehbar.

Bevorzugt ist das Betätigungselement in der zumindest einen Drehstellung des Drehbetätigungselementes in Bezug zur Drehachse axial verschiebbar. Dies gewährleistet leichte Handhabung. Außerdem ist die Bewegung der axialen Verschiebung für den Nutzer leicht von der Drehbewegung des Drehbetätigungselementes zu unterscheiden.

Bevorzugt ist der erste Anschlag in Bezug zur Basis stationär und trägt das Betätigungselement den zweiten Anschlag. In dieser Ausführungsform bewirkt eine Betätigung des Betätigungselementes unmittelbar eine Bewegung des zweiten Anschlages. Die dahinterliegende Mechanik kann somit stark vereinfacht werden und zeichnet sich durch hohe Zuverlässigkeit aus.

Bevorzugt ist das Betätigungselement um die Drehachse verdrehbar und umfasst der Verstellturm einen mechanischen Kopplungsmechanismus, über den das Drehbetätigungselement mit dem Betätigungselement zusammenwirkt, wobei der Kopplungsmechanismus derart ausgebildet ist, dass das Betätigungselement in zumindest einer Drehstellung des Drehbetätigungselementes durch das Drehbetätigungselement um die Drehachse verdrehbar ist. Auf diese Weise wird eine besonders zuverlässige Wirkverbindung zwischen dem Drehbetätigungselement und einem der Anschläge geschaffen. Die Drehung des Drehbetätigungselementes wird (kontinuierlich oder intermittierend) auf das Betätigungselement übertragen. Das Betätigungselement überträgt die Drehbewegung wiederum auf den (zweiten) Anschlag, sodass irgendwann die Anschlagposition (zweiter Anschlag stößt auf ersten Anschlag) erreicht wird. Diese verhindert zunächst, dass sich das Betätigungselement weiterdrehen kann, wodurch über Vermittlung des Kopplungsmechanismus auch das Drehbetätigungselement in seiner Drehung blockiert wird. Erst wenn das Betätigungselement entsprechend betätigt wird, z.B. durch axiale Verschiebung, wird die Anschlagposition überwunden, sodass sich in Folge auch das Drehbetätigungselement weiter verdreht werden kann.

Bevorzugt ist der Kopplungsmechanismus derart ausgebildet, dass während einer ganzen Umdrehung des Drehbetätigungselementes um die Drehachse das Betätigungselement durch das Drehbetätigungselement nur um einen Drehwinkel, der einem Teil einer ganzen Umdrehung entspricht, relativ zur Basis verdrehbar ist. Dadurch wird die Drehbewegung des Betätigungselementes in Bezug zur Drehbewegung des Drehbetätigungselementes beschränkt, wodurch das Betätigungselement auch die Funktion eines Anzeigeelementes übernehmen kann, wie weiter unten näher beschrieben wird.

Bevorzugt ist das Betätigungselement ein Anzeigeelement, das um die Drehachse verdrehbar ist und entlang seines Umfanges zumindest eine von außen sichtbare Markierung aufweist.

Das Anzeigeelement kann dazu genutzt werden, um dem Nutzer die Umdrehungsanzahl des Drehbetätigungselementes anzuzeigen.

Bevorzugt ist das Betätigungselement nur in jener Drehstellung des Drehbetätigungselementes betätigbar, die der Anschlagposition der Anschlagpaarung entspricht. Dadurch wird eine unsachgemäße oder unbeabsichtigte Bedienung des Gerätes verhindert, die zu Abnützung oder Beschädigung von Bauteilen oder dem Eindringen von Schmutz führen könnte.

Bevorzugt ist der erste Anschlag lösbar mit der Basis verbunden und entlang des Umfanges in verschiedenen Positionen relativ zur Basis befestigbar. Dies erlaubt die individuelle Einstellung der Anschlagposition auf jenen Stellweg des Aktorelementes (z.B. Gewindespindel), der der Fleckschussentfernung entspricht. Es handelt sich hierbei um einen individuell auf die Fleckschussentfernung einstellbaren Anschlag. Dazu wird der obere Teil des Verstellturmes ausgebaut und der erste Anschlag, der z.B. in einer Hülse sitzt, relativ zur Basis neu positioniert und befestigt. Z.B. kann der Anschlag in einer Hülse sitzen und wird die Hülse zusammen mit dem Anschlag verdreht, um die gewünschte Position zu erreichen.

Nach dem der Verstellturm wieder zusammengebaut ist bildet diese Anschlagpaarung einen sogenannten Soft-Zero-Stop. Der Benutzer hat - wie bereits oben beschrieben - die Möglichkeit, durch Bewegen, z.B. Heben, des Betätigungselementes diesen Soft-Zero-Stop in beide Richtungen zu durchschreiten, ohne dass diese Positionsmarkierung aufgegeben werden muss.

Bevorzugt sitzt der erste Anschlag in einer Hülse. Dies erleichtert das Verstellen des ersten Anschlages relativ zur Basis.

Bevorzugt ist der erste Anschlag ein in Bezug zur Drehachse radial nach außen ragender Vorsprung, insbesondere ein Stift oder Bolzen. Dies stellt eine platzsparende und zuverlässige Lösung dar.

Bevorzugt weist der Mechanismus zur Überwindung der Anschlagposition einen Anschlagring auf, der den zweiten Anschlag und eine umlaufende Führung ausbildet, in dem der erste Anschlag vor Erreichen oder nach Überwinden der Anschlagposition geführt ist. Dies erleichtert den Übergang und die Betätigung und gibt dem Nutzer die Möglichkeit durch die Lage des Betätigungselementes zu erkennen, ob er sich oberhalb oder unterhalb der Anschlagposition befindet.

Bevorzugt ist das Betätigungselement hülsenförmig ausgebildet und der Anschlagring in dem Betätigungselement eingesetzt und befestigt, insbesondere verklebt. Dies stellt eine platzsparende und leicht herzustellende Lösung dar.

In einer bevorzugten Ausführungsform werden weitere Nachteile des Standes der Technik überwunden. Diese bestehen insbesondere darin, dass bei Verstelltürmen mit einer Umdrehungsanzeige die Gesamtumdrehungsanzahl des Drehbetätigungselementes aufgrund der dort verwendeten mechanischen Konstruktion stark beschränkt ist (auf zwei oder drei ganze Umdrehungen). Außerdem wird durch eine komplizierte und zum Teil asymmetrische oder exzentrische Konstruktion die Schussfestigkeit erheblich beeinträchtigt. Die für eine derartige Konstruktion erforderliche Verwendung von sehr kleinen Bauteilen verursacht eine hohe Fehleranfälligkeit.

Mit dieser Ausführungsform soll ein Verstellturm bereitgestellt werden, der eine Vielzahl an Umdrehungen des Drehbetätigungselementes erlaubt und gleichzeitig eine Anzeige umfasst, die Information darüber gibt, in welcher Umdrehung sich der Verstellturm gerade befindet. Die Anzeige soll für den Nutzer leicht und fehlerfrei ablesbar sein. Das Ablesen der Anzeige soll aus einer Richtung quer zur Achse des Verstellturms möglich sein. Die mechanische Konstruktion soll einfach sein und hohe Schussfestigkeit aufweisen. Eine präzise Einstellung soll gewährleistet sein. In einer Ausführungsform soll die Umdrehungsanzeige relativ zur Basis einstellbar bzw. kalibrierbar sein, z.B. um die "0"-Stellung, die der Fleckschussentfernung entspricht, festzulegen.

In dieser Ausführungsform ist das Betätigungselement gleichzeitig ein Anzeigeelement und ist der Kopplungsmechanismus derart ausgebildet, dass während einer ganzen Umdrehung des Drehbetätigungselementes um die Drehachse das Anzeigeelement durch das Drehbetätigungselement nur um einen Drehwinkel, der einem Teil einer ganzen Umdrehung entspricht, relativ zur Basis verdrehbar ist.

Während das Drehbetätigungselement relativ zur Basis um eine ganze Umdrehung (d.h. um 360°) um die Drehachse verdreht wird, wird das Anzeigeelement relativ zur Basis nur um einen Bruchteil einer ganzen Umdrehung verdreht bzw. weitergetaktet. Der Kopplungsmechaninismus stellt somit ein Untersetzungsgetriebe zwischen Drehbetätigungselement und Anzeigeelement dar. Das Übersetzungsverhältnis (Drehzahl des Drehbetätigungselementes relativ zur Basis / Drehzahl des Antriebselementes relativ zur Basis) ist daher größer als 1.

Es wird ausdrücklich darauf hingewiesen, dass diese Ausführungsform sowohl
- Kopplungsmechanismen, bei denen innerhalb einer ganzen Umdrehung eine kontinuierliche Übertragung der Drehbewegung vom Drehbetätigungselement auf das Anzeigeelement oder Betätigungselement erfolgt (das Anzeigeelement/Betätigungselement dreht sich ständig mit, aber mit langsamerer Drehgeschwindigkeit als das Drehbetätigungselement), als auch
- Kopplungsmechanismen, bei denen die Übertragung der Drehbewegung vom Drehbetätigungselement auf das Anzeigeelement oder Betätigungselement intermittierend erfolgt und somit die Drehbewegung des Anzeigeelementes/Betätigungselementes inkrementell bzw. sprunghaft erfolgt (das Anzeigeelement/Betätigungselement ist während einer Drehphase des Drehbetätigungselementes von diesem entkoppelt bzw. ruht in Bezug zur Basis und ist während einer anderen Drehphase des Drehbetätigungselementes mit diesem gekoppelt und wird zusammen mit dem Drehbetätigungselement - vorzugsweise mit derselben Drehgeschwindigkeit relativ zur Basis verdreht),
umfasst. Im ersten Fall ist der Kopplungsmechanismus ein Getriebe mit kontinuierlicher Übersetzung und im zweiten Fall ein Getriebe mit intermittierender Übersetzung.

Der große Vorteil dieser Ausführungsform besteht darin, dass das Anzeigeelement relativ zur Basis nur um den Bruchteil einer ganzen Umdrehung weiterbewegt wird, wenn das Drehbetätigungselement eine ganze Umdrehung vollführt. Mit einer auf dem Anzeigeelement aufgebrachten Skala und einer Bezugsskala, die zur Basis stationär ist, kann auf einfache und benutzerfreundliche Art die aktuelle Umdrehungszahl des Drehbetätigungselementes abgelesen werden.

Im Gegensatz dazu dreht sich beim Verstellturm der DE20301749U1 die zweifärbige Anzeigetrommel ständig mit der Stellkappe mit. Eine Vielzahl an Sichtfenstern ist entlang des Umfanges erforderlich, um aus einer Richtung die wechselnden Stellungen der Stellkappe zu sehen.

In einer bevorzugten Ausführungsform sind alle (im fertig eingebauten Zustand) drehbaren Bestandteile des Kopplungsmechanismus um jene Drehachse drehbar gelagert, um die auch das Drehbetätigungselement verdrehbar ist. Dies ermöglicht die Verwendung größerer Bauteile, vereinfacht die Konstruktion und erhöht die Schussfestigkeit.

Bevorzugt ist der Kopplungsmechanismus derart ausgebildet, dass der Drehwinkel, um den das Anzeigeelement/Betätigungselement während einer ganzen Umdrehung des Drehbetätigungselementes um die Drehachse verdrehbar ist, höchstens 72°, vorzugsweise höchstens 54° beträgt. Mit anderen Worten ist das Übersetzungsverhältnis zwischen Drehbetätigungselement und Anzeigeelement/Betätigungselement (relativ zur Basis betrachtet) größer als 5, vorzugsweise größer als 6,67. In einer besonders bevorzugten Ausgestaltung könnte das Übersetzungsverhältnis zumindest 10 betragen, sodass zumindest 10 ganze Umdrehungen des Drehbetätigungselementes anzeigbar wären. Als ganz besonders bevorzugt haben sich Ausführungsformen erwiesen bei denen das Übersetzungsverhältnis etwa 20 beträgt.

Bevorzugt sind mit dem Drehbetätigungselement mehr als zwei, vorzugsweise zumindest vier, besonders bevorzugt zumindest neun ganze Umdrehungen um die Drehachse ausführbar. Dies erlaubt eine besonders feine Einstellung der Visierlinie durch Verstellung eines optischen Bauteils eines Zielfernrohres (z.B. Umkehrsystem oder Linse).

Bevorzugt ist das Anzeigeelement mit einer Skala versehen, die entlang des Umfanges des Anzeigeelementes voneinander beabstandete Markierungen derselben Art umfasst, wobei der Winkelabstand zwischen benachbarten Markierungen derselben Art dem Drehwinkel entspricht, um den das Anzeigeelement während einer ganzen Umdrehung des Drehbetätigungselementes um die Drehachse verdrehbar ist. Gemäß dieser Ausführungsform spiegelt der Winkelabstand zwischen den Markierungen das Übersetzungsverhältnis des Kopplungsmechanismus wieder. Unter ,Markierungen derselben Art' werden Markierungen verstanden, die als zusammengehörig angesehen werden und zu einer Skaleneinteilung gehören. Zusätzlich dazu kann auch eine Unterskala mit kleinerer Skaleneinteilung vorgesehen sein. Bei den Markierungen derselben Art kann es sich z.B. um Striche derselben Länge, Ziffern derselben Größe, usw. handeln. Die Skala auf dem Anzeigeelement kann verschieden ausgebildet sein. So kann es sich um eine reine Ziffernskala oder um eine Skala aus geometrischen oder färbigen Zeichen, wie Strichen, Punkten, Formen und dgl., oder um eine Kombination davon handeln.

Bevorzugt bilden die Markierungen derselben Art eine Ziffernfolge. Dies ermöglicht dem Nutzer ein sofortiges Erkennen der aktuellen Umdrehung, in der sich das Drehbetätigungselement befindet.

Bevorzugt ist das Drehbetätigungselement mit einer Skala versehen, die entlang des Umfanges des Drehbetätigungselementes voneinander beabstandete Markierungen umfasst. Dadurch kann auch die Stellung des Drehbetätigungselementes innerhalb einer Umdrehung dem Nutzer angezeigt werden.

Bevorzugt ist das Drehbetätigungselement oberhalb des Anzeigeelementes angeordnet. Das Anzeigeelement befindet sich somit im eingebauten Zustand des Verstellturmes näher beim fernoptischen Gerät als das Drehbetätigungselement. Dies ermöglicht aufgrund der optimalen Zugänglichkeit des Drehbetätigungselementes von oben eine einfache Handhabung des Verstellturmes.

Bei einer bevorzugten Ausführungsform der Erfindung handelt es sich somit um eine sogenannte ,Multiturn'-Turmanzeige, bei der als wesentliches Merkmal eine Skala für die Anzahl der erfolgten Umdrehungen am Turm vorgesehen ist. Diese ist vorzugsweise unmittelbar unterhalb der Skala der 'Klicks' (Skala am Drehbetätigungselement) angeordnet. Der Ablesebereich für beide Skalen liegt direkt übereinander und ist somit im Sichtfeld des Benutzers entlang der optischen Achse des fernoptischen Gerätes angeordnet.

Pro Umdrehung könnte z.B. der Einstellbereich des Drehbetätigungselementes (Klicks) 20 MOA (minutes of angle) betragen. Mit den minutes of angle wird jeweils die Abweichung in Bezug auf die Referenzeinstellung, die für eine bestimmte Einschussbedingung (z.B. 100m) ermittelt bzw. eingestellt wurde, angegeben. Der Zusammenhang zwischen linearem Stellweg des Aktorelementes und dem Kippwinkel der Visierlinie hängt von der konkreten mechanischen Konstruktion ab, sodass diese Überlegungen nur zur Veranschaulichung dienen und beispielhaft sind. Die Stellwege ermöglichen eine hohe Genauigkeit, z.B. im Bereich von 2 µm, des Höhenturmverstellweges, welcher auf das Umkehrsystem wirkt. Der Höhenverstellweg könnte z.B. insgesamt 4,4 mm, das heißt +/- 2,2 mm, betragen. Insgesamt ergeben sich z.B. bei einer Ausführungsform mit bis zu sieben Umdrehungen somit 140 MOA, das heißt +/- 70 MOA für alle Umdrehungen. Der Vorteil besteht nun darin, dass diese Umdrehungen auch zählbar sind.

Das Drehbetätigungselement, das z.B. in Form einer Kappe und mit einer Madenschraube auf dem Turm aufgebracht werden kann, kann "customized" ausgeführt werden, d.h. je nach Kundenwunsch geformt und/oder mit einer gewünschten Skale versehen werden (z.B. graviert). Ein weiterer Vorteil der Ausführungsform liegt darin, dass die gesamte Skala der möglichen Umdrehungen auf dem ring- bzw. hülsenförmigen Anzeigeelement ablesbar ist und somit eine erhöhte Transparenz für den Benutzer gegeben ist.

Bevorzugt überlappen das Drehbetätigungselement und das Anzeigeelement/Betätigungselement zumindest teilweise, wobei vorzugsweise im Überlappungsbereich zwischen Drehbetätigungselement und Anzeigeelement (oder Betätigungselement) ein Dichtungsring sitzt. Dadurch wird das Eindringen von Schmutz und Feuchtigkeit verhindert.

Bevorzugt bildet der Abschnitt des Anzeigeelementes, der mit der Skala versehen ist, einen Mantelabschnitt des Verstellturmes. Dies sorgt nicht nur für eine kompakte Bauweise, sondern ermöglicht im eingebauten Zustand des Verstellturmes ein leichtes Ablesen der Markierungen aus der Richtung des Okulars eines fernoptischen Gerätes.

Bevorzugt sind das Drehbetätigungselement und das Anzeigeelement in Richtung der Drehachse übereinander angeordnet. Dies erlaubt das gleichzeitige Ablesen einer Markierung bzw. Skala auf dem Anzeigeelement sowie einer Markierung bzw. Skala auf dem Drehbetätigungselement, und zwar auch aus einer Richtung quer zur Achse des Verstellturmes. Dadurch können auf einen Blick zwei Informationen erhalten werden.

Bevorzugt ist der Kopplungsmechanismus derart ausgebildet, dass die Drehbewegungsübertragung vom Drehbetätigungselement auf das Betätigungselement bzw. Anzeigeelement intermittierend jeweils nur nach einer vollständigen Umdrehung des Drehbetätigungselementes erfolgt. Der Übergang von einer vollen Umdrehung zur nächsten kann dadurch für den Nutzer eindeutiger bzw. exakter angezeigt werden.

Bevorzugt ist der Kopplungsmechanismus zwischen einer Kopplungsstellung, in der das Anzeigeelement (oder Betätigungselement) durch das Drehbetätigungselement verdrehbar ist, und einer Entkopplungsstellung, in der das Anzeigeelement (oder Betätigungselement) von der Drehbewegung des Drehbetätigungselementes entkoppelt ist, bewegbar. Die Drehbewegung des Drehbetätigungselementes wird hier intermittierend auf das Anzeigeelement (oder Betätigungselement) übertragen. Letzteres wird nach jeder ganzen Umdrehung des Drehbetätigungselementes weitergetaktet. Diese Ausführungsform ist besonders vorteilhaft, da das Anzeigeelement während eines Großteils der Drehbewegung des Drehbetätigungselementes relativ zur Basis ruht und vom Drehbetätigungselement entkoppelt ist. Dies ermöglicht nicht nur eine mechanisch einfache Konstruktion, sondern gewährleistet auch eine hohe Schussfestigkeit. In der Ruhestellung kann z.B. das Anzeigeelement in Bezug zur Basis verrastet werden. Zwischen den einzelnen Umdrehungszählstellungen erfolgt somit ein scharfer Übergang, d.h. dass das Anzeigeelement nicht wie bei einem Uhrwerk kontinuierlich weiterbewegt wird, bis die nächste Ziffer entsprechend der nächsten Umdrehung erreicht ist, sondern es erfolgt tatsächlich ein sprunghafter Übergang zur nächsten Ziffer.

Bevorzugt umfasst der Kopplungsmechanismus einen Mitnehmer, der in Bezug zur Drehachse axial verschiebbar zwischen einer ersten Stellung und einer zweiten Stellung, wobei der Mitnehmer in der ersten Stellung, die der Entkopplungsstellung des Kopplungsmechanismus entspricht, vom Drehbetätigungselement entkoppelt ist und in der zweiten Stellung, die der Kopplungsstellung des Kopplungsmechanismus entspricht, mit dem Drehbetätigungselement gekoppelt und durch das Drehbetätigungselement um die Drehachse verdrehbar ist, sodass eine Drehbewegung des Drehbetätigungselementes über den Mitnehmer auf das Anzeigeelement (oder Betätigungselement) übertragbar ist.

Diese Ausführungsform erlaubt die Kopplung durch axiale Verschiebung eines Mitnehmers zu realisieren, wodurch die Verwendung kleiner Bauteile mit eigener Drehachse vermieden werden kann. Weitere Drehachsen außer der Drehachse, um die sich das Drehbetätigungselement dreht, sind nicht erforderlich. Dadurch vereinfacht sich die Konstruktion, die weitgehend konzentrisch in Bezug zur Drehachse des Drehbetätigungselementes erfolgen kann.

Bevorzugt weist der Mitnehmer zumindest eine in radialer Richtung abstehende Mitnehmerstruktur auf, die in zumindest eine entlang des Umfanges des Anzeigeelementes ausgebildete Ausnehmung des Anzeigeelementes ragt. Dies erlaubt eine platzsparende Konstruktion. Die Ausnehmung kann am Anzeigeelement z.B. derart ausgebildet bzw. angeordnet sein, dass sie vom Drehbetätigungselement verdeckt wird. Die Ausnehmung ist vorzugsweise in axialer Richtung so lang (bzw. nach oben hin offen), um eine axiale Verschiebung des Mitnehmers zu ermöglichen, ohne dass die Ankopplung an das Anzeigeelement verloren geht.

Bevorzugt weist der Mitnehmer zumindest einen Mitnehmerstift auf, der in der Kopplungsstellung in ein mit dem Drehbetätigungselement verbundenes Antriebselement eingreift. Dies gewährleistet eine zuverlässige Kopplung. Dabei handelt es sich um eine formschlüssige Kopplung, womit die Nachteile einer reibschlüssigen Kopplung (Schlupf) vermieden werden.

Bevorzugt umfasst das Antriebselement eine Lochscheibe. Der Mitnehmerstift fährt zumindest teilweise in das mit ihm fluchtende Loch, wodurch eine zuverlässige Ankopplung erreicht wird. Die Lochscheibe kann je nach Übersetzungsverhältnis des Kopplungsmechanismus eine entsprechende Verteilung der Löcher aufweisen.

Bevorzugt umfasst der Mitnehmer eine Feder, der den Mitnehmerstift in der Kopplungsstellung in Richtung des Antriebselementes belastet. Dies gewährleistet eine zuverlässige Kopplung und wirkt gleichzeitig als Toleranzausgleich bei nicht exakt fluchtenden Löchern.

Bevorzugt ist der Mitnehmer in einer Führung geführt, die im Wesentlichen parallel zur Drehachse steht. Dies führt zu einer möglichst präzisen Positionierung des Mitnehmerstiftes z.B. unterhalb eines Loches der Lochscheibe.

Bevorzugt umfasst der Kopplungsmechanismus einen Schaltmechanismus, der in einer Drehstellung des Drehbetätigungselementes den Mitnehmer von der ersten Stellung in die zweite Stellung bewegt. Ein zusätzlicher Schaltmechanismus erhöht den Betätigungskomfort des Verstellturmes weiter und sorgt für einen sanften, kaum merkbaren Übergang zwischen der Kopplungsstellung und Entkopplungsstellung und vice versa.

Bevorzugt umfasst der Schaltmechanismus ein Schaltelement, das in Bezug zur Drehachse axial verschiebbar gelagert ist und durch das Drehbetätigungselement um die Drehachse verdrehbar ist, und ein Ansteuerungselement, das in Bezug zur Basis stationär ist und in einer Drehstellung des Drehbetätigungselementes das Schaltelement axial in Richtung Mitnehmer drückt. Es handelt sich hier insbesondere um eine Kulissensteuerung bzw. Kulissenführung, die in Form einer Gleitbahn bzw. Zwangsführung ausgebildet sein kann. Das Ansteuerungselement stellt eine Art Hindernis im Drehweg des Schaltelements dar. Das Schaltelement wird beim Überfahren des Hindernisses in axiale Richtung (nach oben) gedrückt, wodurch es in weiterer Folge auf den Mitnehmer wirkt. Durch den Schaltmechanismus bzw. Schaltelement im Zusammenwirken mit dem Ansteuerungselement wird der Vorgang des axialen Verschiebens des Mitnehmers von der Übertragung der Drehbewegung vom Drehbetätigungselement auf den Anzeigering weitgehend entkoppelt.

Bevorzugt weist das Schaltelement an einer seiner Stirnseiten eine umlaufende Rille auf, die an einer Stelle durch einen Steg unterbrochen ist, wobei das Ansteuerungselement in der Entkopplungsstellung in der Rille geführt ist und in der Kopplungsstellung auf dem Steg anliegt und somit das Schaltelement in axialer Richtung verschiebt. Dies stellt einen besonders kompakten und sicheren Schaltmechanismus dar. Das Ansteuerungselement kann in diesem Fall ein Stift oder Bolzen sein, der an seinem der Rille zugewandten Ende abgerundet ist.

Bevorzugt umfasst der Kopplungsmechanismus eine Feder, die den Mitnehmer in Richtung der ersten Stellung belastet. Dadurch wird sichergestellt, dass das Anzeigeelement nicht durch das Drehbetätigungselement angetrieben wird, wenn aufgrund des intermittierenden Übersetzungsmechanismus eine Kopplung nicht vorgesehen ist.

Bevorzugt umfasst der Kopplungsmechanismus eine Feder, die das Schaltelement in Richtung der Entkopplungsstellung belastet. Dadurch wird gewährleistet, dass es nicht zu einer ,Fehlschaltung' kommt.

Bevorzugt sind der Mitnehmer und das Schaltelement jeweils durch eine gesonderte Feder in Richtung der Entkopplungsstellung belastet, wodurch die Zuverlässigkeit weiter erhöht wird.

Bevorzugt ist die Feder eine Spiralfeder, die konzentrisch zur Drehachse angeordnet ist. Dies erlaubt den Einbau relativ großer Federn, vereinfacht den Einbau und erhöht die Schussfestigkeit.

In einer bevorzugten Ausführungsform wird die Bewegung des Drehbetätigungselementes (Drehung) über eine Drehübertragungsspindel auf ein Aktorelement an der Unterseite des Verstellturmes (translatorische Bewegung) übertragen und umgeben der Mitnehmer und das Schaltelement die Drehübertragungsspindel.

Bevorzugt weist der Kopplungsmechanismus eine Rasteinrichtung auf, die in der Entkopplungsstellung das Anzeigeelement mit der Basis verdrehsicher verrastet. Dadurch wird gewährleistet, dass sich das Anzeigeelement nicht von selbst (d.h. unabhängig vom Drehbetätigungselement) zu drehen beginnt, z.B. aufgrund externer Einflüsse wie Erschütterungen, Rückschläge während eines Schusses, etc., und keine falsche Umdrehungsanzeige liefert.

Bevorzugt wird ein erster Teil der Rasteinrichtung durch den Mitnehmer gebildet und ist ein zweiter Teil der Rasteinrichtung, der mit dem ersten Teil der Rasteinrichtung zusammenwirkt, in Bezug zur Basis stationär ausgebildet, wobei vorzugsweise der erste Teil der Rasteinrichtung entlang des Umfanges des Mitnehmers verteilte Rastelemente umfasst und der zweite Teil der Rasteinrichtung in Bezug zur Basis stationär ausgebildete Rastelemente umfasst.

Hier übernimmt der Mitnehmer nicht nur die Aufgabe der Drehbewegungsübertragung, sondern auch die Verrastung des Anzeigeelementes. Die Konzentration dieser Funktionen in einem Bauteil (Mitnehmer) reduziert die Gesamtzahl der Bauteile und vereinfacht die Konstruktion. Bevorzugt weist also der Mitnehmer entlang seines Umfanges mehrere Rastelemente auf.

Bevorzugt ist der Mitnehmer ringförmig ausgebildet und konzentrisch zum Drehbetätigungselement angeordnet. Dadurch wird eine platzsparende und stabile Konstruktion erreicht.

Bevorzugt sind die Rastelemente (des zweiten Teils der Rasteinrichtung), die in Bezug zur Basis stationär ausgebildet sind, an einer Rasthülse ausgebildet, die stationär zur Basis ist.

Bevorzugt weist der Verstellturm eine Einrichtung zur Umwandlung der Drehbewegung des Drehbetätigungselementes in eine translatorische Bewegung eines Aktorelementes auf, wobei vorzugsweise die Einrichtung eine Gewindespindel umfasst. Das Aktorelement wirkt im eingebauten Zustand des Verstellturmes auf ein optisches Element bzw. das Absehen des fernoptischen Gerätes. Üblicherweise ist das Aktorelement entlang der Drehachse des Drehbetätigungselementes verschiebbar.

Bevorzugt weist der Verstellturm eine Bezugsmarkierung auf, die in Bezug zur Basis stationär ist und einen Bezug zur zumindest einen Markierung auf dem Anzeigeelement herstellt, wobei vorzugsweise die Bezugsmarkierung ein Sichtfenster ist, durch das die zumindest eine Markierung des Anzeigeelementes hindurch sichtbar ist. Die stationäre Bezugsmarkierung ermöglicht in Zusammenschau mit der Markierung oder Skala auf dem Anzeigeelement ein benutzerfreundliches und fehlerfreies Ablesen der aktuellen Umdrehung des Drehbetätigungselementes.

In einer bevorzugten Ausführungsform umfasst der Verstellturm eine Einrichtung zur Umwandlung der Drehbewegung des Drehbetätigungselementes in eine translatorische Bewegung eines Aktorelementes, wobei die Einrichtung eine Drehübertragungsspindel, die mit dem Drehbetätigungselement verbunden ist, ein Übertragungselement, das mit der Drehübertragungsspindel drehfest verbunden ist und auf seiner dem Aktorelement zugewandten Seite zumindest zwei Schenkel und an seiner Außenseite im Bereich der Schenkel einen schräg oder konisch geformten Abschnitt aufweist, umfasst, wobei der schräg oder konisch geformte Abschnitt des Übertragungselementes im eingebauten Zustand gegen eine Gegenfläche der Drehübertragungsspindel gedrückt ist, sodass aufgrund der auf den schräg oder konusförmig geformten Abschnitt wirkenden Kraft die Schenkel zueinander gedrückt werden und das Aktorelement oder ein dem Aktorelement vorgelagertes Element zwischen sich einzwängen. Das Aktorelement oder das dem Aktorelement vorgelagerte Element ist eine Gewindespindel, die in einem Innengewinde der Basis gelagert ist.

Durch diese Maßnahme kann ein Totgang, der durch Fertigungs- oder Einbautoleranzen entstehen könnte, effizient verhindert werden. Die auf das Aktorelement oder ein gegebenenfalls in der Antriebskette vorgelagertes Element wirkende Einzwängkraft der Schenkel verhindert jedes Spiel, sodass es auch beim Wechsel der Drehrichtung zu keinem Totgang kommt. Die Schenkel erlauben jedoch nach wie vor, dass sich das Aktorelement (in Form einer Gewindespindel) relativ zum Übertragungselement in axialer Richtung translatorisch bewegen kann, sodass ein linearer Stellweg realisierbar ist. Dazu könnten z.B. die einander zugewandten Flächen der Schenkel im Wesentlichen parallel zueinander sein. Die Gegenfläche der Drehübertragungsspindel ist vorzugsweise ebenfalls konisch ausgebildet.

Bevorzugt weist das Übertragungselement an seiner Außenseite eine Verzahnung auf, die in einer Innenverzahnung der Drehübertragungsspindel sitzt. Dadurch wird die Drehfestigkeit zwischen Übertragungselement und Drehübertragungsspindel weiter erhöht.

Bevorzugt verbindet zumindest eine Schraube das Übertragungselement mit der Drehübertragungsspindel und drückt in Richtung entlang der Konusachse des konusförmig geformten Abschnitts gegen die Gegenfläche der Drehübertragungsspindel. Die Verwendung einer Schraube zur Erzielung der Einzwängkraft stellt eine besonders zuverlässige und einfache Lösung dar.

Bevorzugt weist das Übertragungselement auf der den Schenkeln abgewandten Seite eine axiales Loch, vorzugsweise mit einem Innengewinde, auf, und verbinden radial nach außen führende Öffnungen das Innere des Loches mit der Außenseite des Übertragungselementes. Durch die radialen Öffnung kann auf einfache Weise Klebstoff eingebracht werden, der in Richtung Außenseite des Übertragungselementes fließt und damit eine zuverlässige Verbindung zwischen Übertragungselement und Drehübertragungsspindel schafft.

Bevorzugt ist das Übertragungselement aus Kunststoff gebildet. Dies Gewährleistet die gewünschte Flexibilität der Schenkel zur Erzielung der Einzwänkraft.

Bevorzugt ist also das Übertragungselement mittels Kleber mit der Dreh-übertragungsspindel verklebt ist.

Das Ziel wird auch mit einem fernoptischen Gerät, insbesondere Zielfernrohr, mit einem Verstellturm, insbesondere zur Verstellung der Visierlinie durch Verstellung zumindest eines optischen Bauteils innerhalb des fernoptisches Gerätes, gelöst wobei der Verstellturm nach einer der vorhergehenden Ausführungsformen ausgebildet ist.

Zum besseren Verständnis der Erfindung wird diese anhand der nachfolgenden Figuren näher erläutert.

Es zeigen jeweils (z.T. in vereinfachter, schematischer Darstellung):
- Fig. 1: ein Zielfernrohr im Schnitt parallel zur optischen Achse;
- Fig. 2: einen erfindungsgemäßen Verstellturm;
- Fig. 3: den Verstellturm aus Fig. 2 im Schnitt;

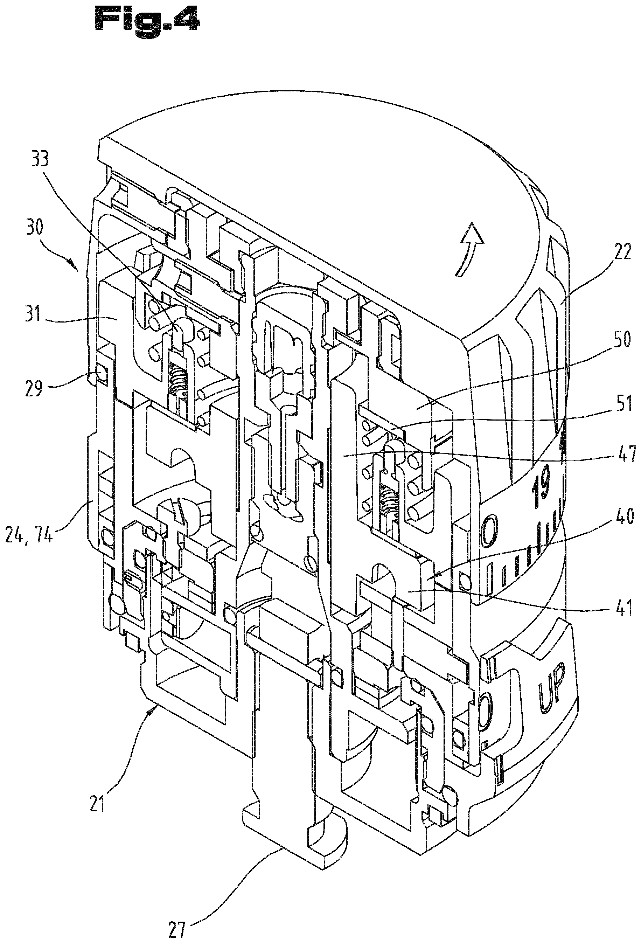

- Fig. 4: den Verstellturm in aufgeschnittener Darstellung;
- Fig. 5: den Verstellturm in aufgeschnittener Darstellung;
- Fig. 6: den Verstellturm im Bereich des Antriebselementes in aufgeschnittener Darstellung;
- Fig. 7: den Verstellturm im Bereich des Anzeigeelementes in aufgeschnittener Darstellung;
- Fig. 8: eine Rastung des Verstellturmes;
- Fig. 9: das Anzeigeelement, die Rasthülse und den Mitnehmer;
- Fig. 10: den Anschlagring;
- Fig. 11: das Übertragungselement mit der Hohlschraube;
- Fig. 12: das Schaltelement;
- Fig. 13: die Mitnehmerspindel;
- Fig. 14: die Steuerscheibe.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

Sämtliche Angaben zu Wertebereichen in gegenständlicher Beschreibung sind so zu verstehen, dass diese beliebige und alle Teilbereiche daraus mitumfassen, z.B. ist die Angabe 1 bis 10 so zu verstehen, dass sämtliche Teilbereiche, ausgehend von der unteren Grenze 1 und der oberen Grenze 10 mit umfasst sind, d.h. sämtliche Teilbereiche beginnen mit einer unteren Grenze von 1 oder größer und enden bei einer oberen Grenze von 10 oder weniger, z.B. 1 bis 1,7, oder 3,2 bis 8,1, oder 5,5 bis 10.

Der Ordnung halber sei abschließend darauf hingewiesen, dass zum besseren Verständnis des Aufbaus des Verstellturmes dieser bzw. dessen Bestandteile teilweise unmaßstäblich und/oder vergrößert und/oder verkleinert dargestellt sein können.

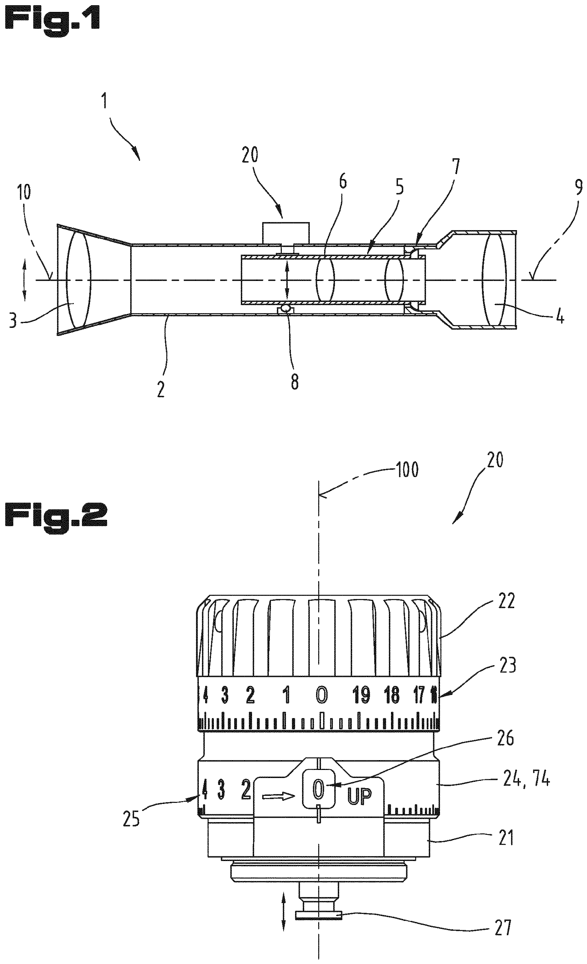

Fig. 1 zeigt in stark schematischer Darstellung ein fernoptisches Gerät 1 in Form eines Zielfernrohres mit einem äußeren Gehäuse 2 (Haupttubus), in dem zwi-schen Objektiv 3 und Okular 4 ein Umkehrsystem 5 angeordnet ist. Die optischen Elemente des Umkehrsystems 5, z.B. zwei Kittlinsen, sitzen in einem inneren Ge-häuse 6 (Hilfstubus). Das Umkehrsystem 5 ist zusammen mit dem inneren Ge-häuse 6 als bauliche Einheit im Inneren des äußeren Gehäuses 2 an einem Lager 7, z.B. Kugelsitz, drehbar bzw. kippbar gelagert. Ein Kippen dieser Einheit wird durch eine Verstellung quer zur optischen Achse 9 erreicht (durch Doppelpfeil angedeutet). Dadurch verändert sich auch die Richtung der Visierlinie 10, die durch den Verstellmechanismus gezielt justiert werden kann.

Zur Verstellung des Umkehrsystems 5 innerhalb des äußeren Gehäuses 2 ist ein auf das Umkehrsystem 5 wirkender Verstellturm 20 vorgesehen, der mittels eines Drehbetätigungselementes 22 (Fig. 2) betätigbar ist.

Zur Rückstellung des Umkehrsystems 5 entlang des Stellweges (Doppelpfeil) ist ein Rückstellmechanismus 8 vorgesehen, der sich in axialer Richtung vorzugswei-se auf derselben Höhe befindet wie der Verstellturm 20.

In alternativen Ausgestaltungen kann der Verstellturm 20 auch mit anderen optischen Bauteilen innerhalb des äußeren Gehäuses 2 zusammenwirken. So kann z.B. das Objektiv 3 innerhalb des äußeren Gehäuses 2 verstellbar gelagert sein, um eine Verstellung der Visierlinie 10 zu erreichen. Ebenso könnte der Verstellturm 20 dazu eingerichtet sein, ein Absehen zu bewegen.

Fig. 2 zeigt nun eine bevorzugte Ausführungsform eines erfindungsgemäßen Verstellturms 20 von außen. Eine Basis 21 trägt ein Drehbetätigungselement 22 in Form einer Drehkappe, die relativ zur Basis 21 um eine Drehachse 100 verdrehbar gelagert ist. In der bevorzugten Ausführungsform aus Fig. 2 ist das Drehbetätigungselement 22 entlang seines Umfanges mit Markierungen 23 versehen, die eine Skala bilden und die Position des Drehbetätigungselements 22 innerhalb einer Umdrehung anzeigen.

Unterhalb des Drehbetätigungselements 22 befindet sich ein ringförmiges oder hülsenförmiges Anzeigeelement 24, das mit Markierungen 25 entlang seines Umfanges versehen ist. Das Anzeigeelement 24 ist ebenfalls um die Drehachse 100 verdrehbar, allerdings hängt das Ausmaß seiner Verdrehung von der Verdrehung des Drehbetätigungselements 22 ab. Der entsprechende Kopplungsmechanismus zwischen Drehbetätigungselement 22 und Anzeigeelement 24 wird später ausführlich beschrieben.

Das Anzeigeelement 24 dient dazu, jene Umdrehung anzuzeigen, in der sich das Drehbetätigungselement 22 gerade befindet. Die Markierungen 25 enthalten eine Folge von Markierungen derselben Art. Diese sind entlang des Umfanges jeweils äquidistant voneinander beabstandet und bilden eine Skaleneinteilung. Im vorliegenden Fall sind dies die Ziffern einer Ziffernfolge. Der Winkelabstand zwischen benachbarten Markierungen derselben Art entspricht dem Drehwinkel, um den das Anzeigeelement 24 während einer ganzen Umdrehung des Drehbetätigungselementes 22 um die Drehachse 100 verdrehbar ist.

Das Drehbetätigungselement 22 und das Anzeigeelement 24 sind konzentrisch zueinander angeordnet und bilden jeweils einen Mantelabschnitt des Verstellturmes 20. Gemäß der bevorzugten Ausführungsform aus Fig. 2 weisen Drehbetätigungselement 22 und Anzeigeelement 24 im Wesentlichen denselben Durchmesser auf.

In Fig. 2 ist weiters eine Bezugsmarkierung 26 zu sehen, die in Bezug zur Basis 21 stationär ist und einen Bezug zu den eine Skala bildenden Markierungen 25 auf dem Anzeigeelement 24 herstellt. Hier ist die Bezugsmarkierung 26 als Sichtfenster ausgebildet, durch das jeweils die aktuelle Markierung des Anzeigeelementes 24 hindurch sichtbar ist. Der Nutzer erkennt somit auf den ersten Blick die Umdrehung, in der sich das Drehbetätigungelement 22 gerade befindet und kann zusammen mit der Position der Markierungen 23 auf dem Drehbetätigungelement 22 die aktuelle Einstellung genau ablesen bzw. auf diese rückschließen.

An der Unterseite des Verstellturmes 20 ragt ein Aktorelement 27 hevor, das in Abhängigkeit der Drehstellung des Drehbetätigungselementes 22 mehr oder weniger weit nach unten abragt. D.h. durch die Drehbetätigung des Drehbetätigungselementes 22 ist das Aktorelement entlang der Drehachse 100 auf und ab verschiebbar (angedeutet durch den Doppelpfeil in Fig. 2) und drückt im eingebauten Zustand gegen ein optisches Bauteil eines fernoptischen Gerätes (Fig. 1). Dazu weist der Verstellturm 20 eine Einrichtung zur Umwandlung der Drehbewegung des Drehbetätigungselementes 22 in eine translatorische Bewegung des Aktorelementes 27 auf, wobei - wie später näher beschrieben - diese Einrichtung vorzugsweise eine Gewindespindel umfasst.

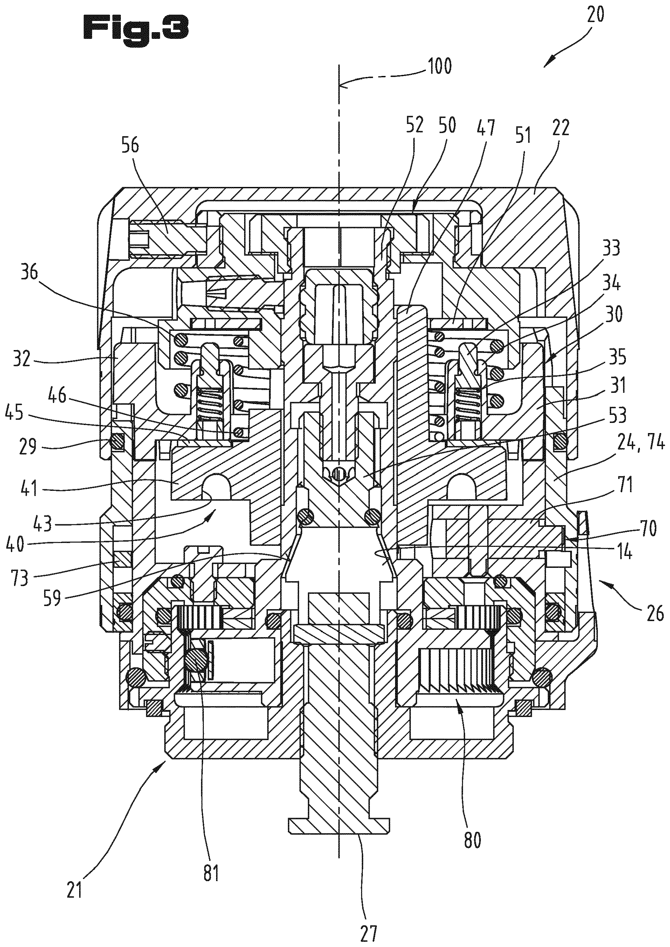

Fig. 3 zeigt einen erfindungsgemäßen Verstellturm 20 im Schnitt. Im Inneren des Verstellturmes 20 ist ein mechanischer Kopplungsmechanismus 30 vorgesehen, über den das Drehbetätigungselement 22 mit dem Anzeigeelement 24 zusammenwirkt. Außerdem wirkt das Drehbetätigungselement 22 über ein Antriebselement 50 auf eine Übertragungsspindel 52, die mittels eines Übertragungselementes 53 die Drehbewegung auf das als Gewindespindel ausgebildete Aktorelement 27 überträgt. Das Übertragungselement 53 ist dabei so ausgebildet, dass es eine axiale Verstellung des Aktorelementes 27 zulässt.

Das Drehbetätigungselement 22 und das Anzeigeelement 24 überlappen zu-mindest teilweise. Im Überlappungsbereich sitzt zwischen Drehbetätigungselement 22 und Anzeigeelement 24 ein Dichtungsring 29.

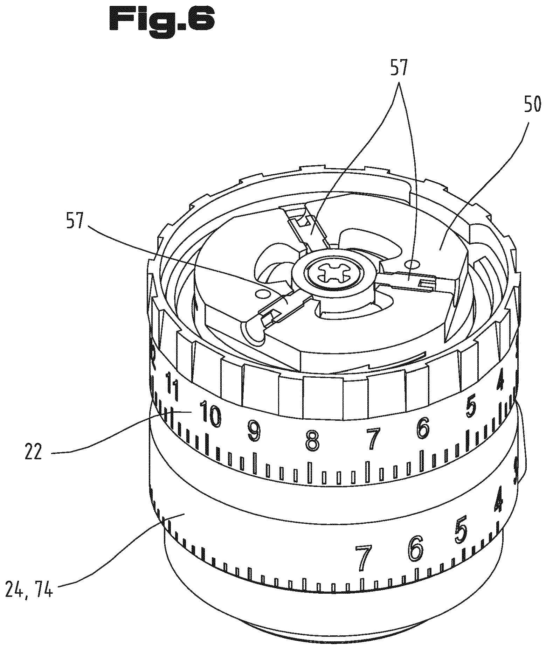

Fig. 6 zeigt die Anbindung des Drehbetätigungselementes 22 an die Drehübertragungsspindel 52 bzw. das Antriebselement 50 von oben. Das Antriebselement 50 ist über radial verlaufende Schrauben 57 mit der Drehübertragungsspindel 52 drehfest verbunden. Das Drehbetätigungselement 22 ist über das Antriebselement 52 bzw. über die Drehübertragungsspindel 52 gestülpt und mittels radial verlaufenden Schrauben 56 (Fig. 3) drehfest an das Antriebselement 50 gekoppelt.

Der Kopplungsmechanismus 30 ist derart ausgebildet ist, dass das Anzei-geelement 24 in zumindest einer Drehstellung des Drehbetätigungselementes 22 durch das Drehbetätigungselement 22 um die Drehachse 100 verdrehbar ist und dass während einer ganzen Umdrehung des Drehbetätigungselementes 22 um die Drehachse 100 das Anzeigeelement 24 durch das Drehbetätigungselement 22 nur um einen Drehwinkel, der einem Teil einer ganzen Umdrehung entspricht, relativ zur Basis 21 verdrehbar ist. Der Kopplungsmechanismus 30 stellt somit ein Untersetzungsgetriebe dar. In der dargestellten bevorzugten Ausführungsform erfolgt die Übersetzung intermittierend. D.h. der Kopplungsmechanismus wechselt während einer vollständigen Umdrehung des Drehbetätigungselementes 22 von einer Kopplungsstellung, in der er das Drehbetätigungselement 22 und das Anzeigeelement 24 miteinander antriebsmäßig verknüpft, und einer Entkopplungsstellung, in der das Drehbetätigungselement 22 und das Anzeigeelement 24 voneinander entkoppelt sind.

Bevorzugt beträgt der Drehwinkel, um den das Anzeigeelement 24 während einer ganzen Umdrehung des Drehbetätigungselementes 22 um die Drehachse 100 verdrehbar ist, höchstens 72°, vorzugsweise höchstens 54°. In der dargestellten Ausführungsform beträgt der Winkel 18°, womit nun zwanzig Umdrehungen des Drehbetätigungselementes 22 durch das Anzeigeelement anzeigbar sind.

Mit dem Drehbetätigungselement 22 sind mehr als zwei, vorzugsweise zumindest vier, besonders bevorzugt zumindest neun ganze Umdrehungen um die Drehachse 100 ausführbar. In der dargestellten Ausführungsform sogar zwanzig Umdrehungen.

Im Folgenden wird der Kopplungsmechanismus der dargestellten bevorzugten Ausführungsform näher beschrieben.

Wie bereits erwähnt ist der Kopplungsmechanismus 30 zwischen einer Kopplungsstellung, in der das Anzeigeelement 24 durch das Drehbetätigungselement 22 verdrehbar ist, und einer Entkopplungsstellung, in der das Anzeigeelement von der Drehbewegung des Drehbetätigungselementes entkoppelt ist, bewegbar. Dies bedeutet, dass das Anzeigeelement 24 nur in einem begrenzten Drehabschnitt vom Drehbetätigungselement 22 relativ zur Basis angetrieben wird. Außerhalb dieses Drehabschnittes ruht das Anzeigeelement 24 bezüglich der Basis 21 und es dreht sich nur das Drehbetätigungselement 22.

Der Kopplungsmechanismus 30 umfasst einen Mitnehmer 31, der in Bezug zur Drehachse 100 axial entlang der Übertragungsspindel 52 verschiebbar ist zwischen einer ersten Stellung und einer zweiten Stellung. In der ersten Stellung, die der Entkopplungsstellung des Kopplungsmechanismus 30 entspricht, ist der Mitnehmer 30 vom Drehbetätigungselement 22 entkoppelt (Fig. 3). In der zweiten Stellung, die der Kopplungsstellung des Kopplungsmechanismus 30 entspricht, ist der Mitnehmer 31 mit dem Drehbetätigungselement 22 gekoppelt und durch das Drehbetätigungselement 22 um die Drehachse 100 verdrehbar, sodass eine Drehbewegung des Drehbetätigungselementes 22 über den Mitnehmer 31 auf das Anzeigeelement 24 übertragbar ist. Der Mitnehmer 31 ist vorzugsweise ringförmig ausgebildet und konzentrisch zum Drehbetätigungselement 22 angeordnet.

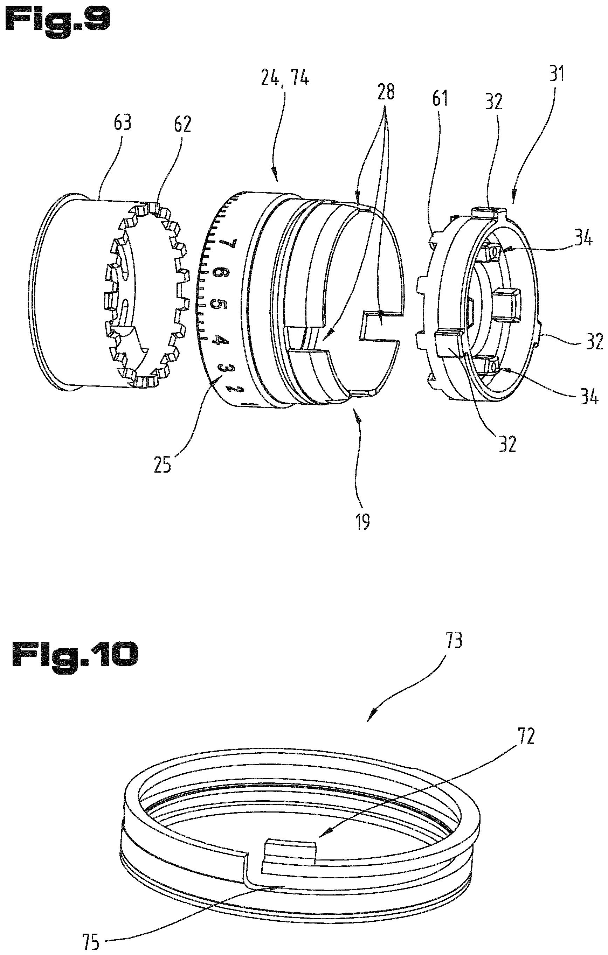

Die Anbindung des Mitnehmers 31 an den Anzeigering 24 erfolgt vorzugsweise durch zumindest eine in radialer Richtung abstehende Mitnehmerstruktur 32, die in zumindest eine entlang des Umfanges des Anzeigeelementes 24 ausgebildete Ausnehmung 28 des Anzeigeelementes 24 ragt. In der bevorzugten Ausführungsform sind mehrere Ausnehmungen 28 mit zugeordneten Mitnehmerstrukturen 32 vorgesehen, wie dies aus Fig. 9 ersichtlich ist. Die Ausnehmungen 28 sind dabei in axialer Richtung gesehen so lang ausgebildet, dass der Mitnehmer 31 relativ zum Anzeigeelement 24 axial verschiebbar ist, ohne dass die mehr oder weniger drehfeste Anbindung des Mitnehmers 31 an den Anzeigering 24 gelöst wird.

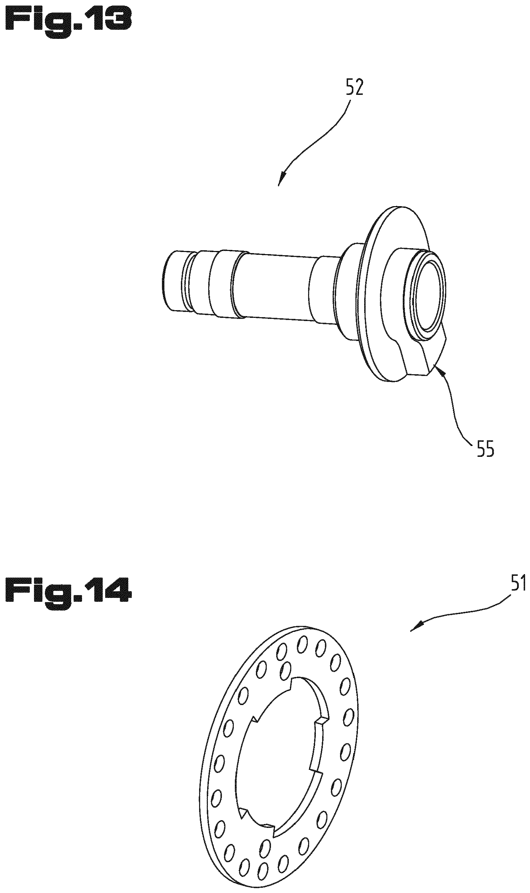

Wie aus Fig. 3 zu sehen ist kann der Mitnehmer 31 zumindest einen Mitnehmerstift 33 aufweisen, der in der Kopplungsstellung in ein mit dem Drehbetätigungselement 22 verbundenes Antriebselement 50 eingreift. In der dargestellten Ausführungsform umfasst das Antriebselement eine Steuerscheibe 51, die in bestimmten Winkelabständen mit Löchern versehen ist (Fig. 14). Wenn der Mitnehmer 31 nach oben gedrückt wird, greifen die Mitnehmerstifte 33 in die Löcher der Steuerscheibe 51 ein, wodurch eine Anbindung an das Drehbetätigungselement 22 erfolgt. Durch diese Anbindung wird nun eine Drehbewegung des Drehbetätigungselements 22 auf das Anzeigeelement 24 übertragen.

Der Mitnehmer 31 kann für jeden Mitnehmerstift 33 eine Feder 35 umfassen, die den Mitnehmerstift 33 in der Kopplungsstellung in Richtung des Antriebselementes 50 belastet. Dadurch werden die Mitnehmerstifte jeweils in Richtung eines Loches der Steuerscheibe 51 gedrückt, wodurch eine zuverlässige Ankopplung erfolgt.

Die Mitnehmerstifte 33 können zusätzlich jeweils in einer Führung 34 geführt sein, die im Wesentlichen parallel zur Drehachse 100 verläuft.

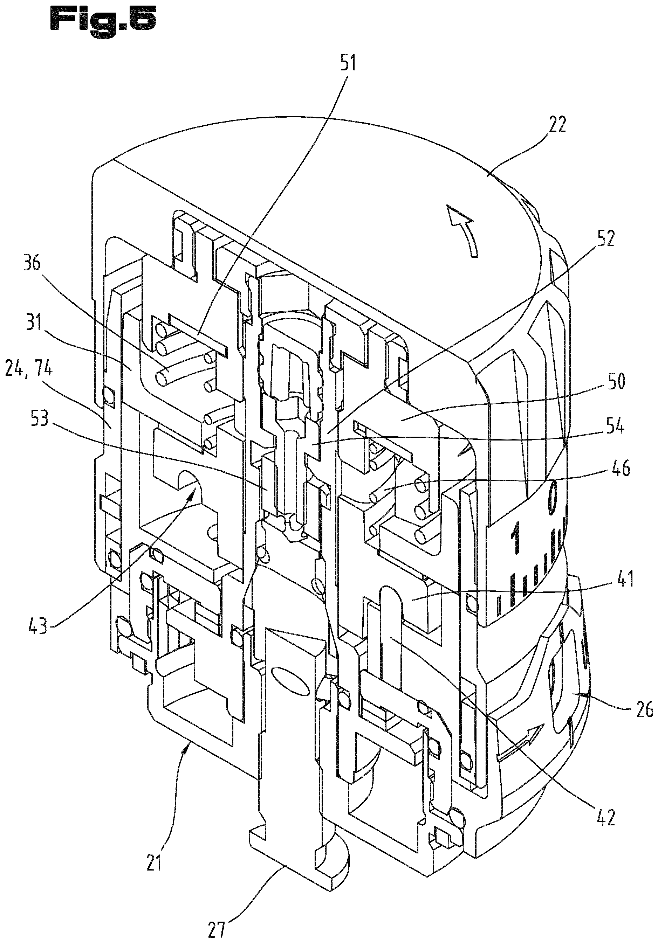

Im Folgenden wird eine Möglichkeit beschrieben, wie der Mitnehmer in die Kopplungsstellung bzw. die Entkopplungsstellung gelangt. In der bevorzugten Ausführungsform umfasst der Kopplungsmechanismus 30 einen Schaltmechanismus 40, der in einer Drehstellung des Drehbetätigungselementes 22 den Mitnehmer 31 von der ersten Stellung in die (axial verschobene) zweite Stellung bewegt. Dazu umfasst der Schaltmechanismus 40 ein Schaltelement 41, das in Bezug zur Drehachse 100 axial verschiebbar gelagert ist und durch das Drehbetätigungselement 22 um die Drehachse 100 verdrehbar ist, und ein Ansteuerungselement 42, das in Bezug zur Basis 21 stationär ist. Das Ansteuerungselement 42 ist bevorzugt in Form eines parallel zur Drehachse 100 nach oben ragenden Ansteuerungsbolzens bzw. Ansteuerungsstiftes ausgebildet (Fig. 5). Eine optionale Gleitscheibe 45 zwischen Mitnehmer 31 und Schaltelement 41 kann dafür sorgen, dass der Mitnehmer 31 leichter gegen das Schaltelement 41 verdreht werden kann.

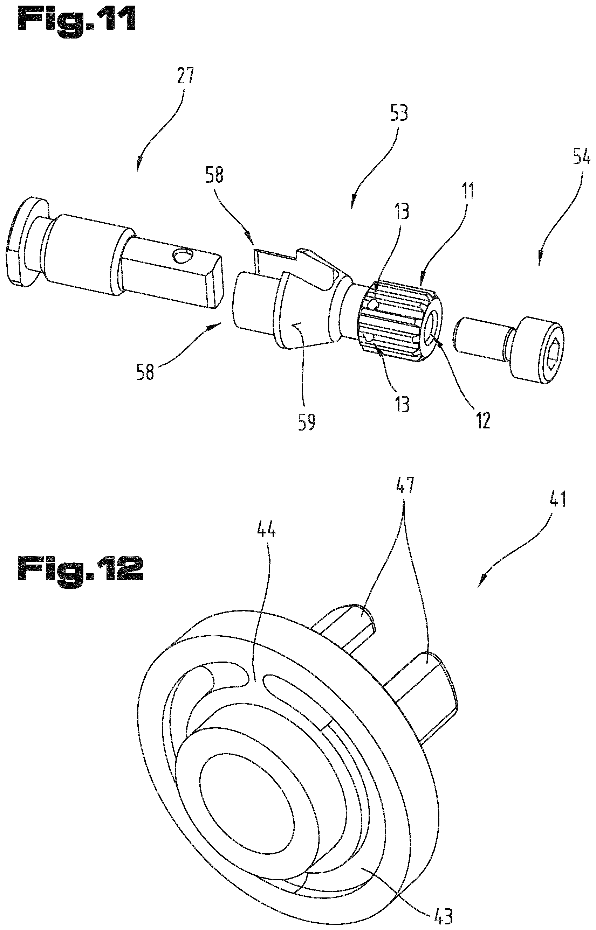

In einer Drehstellung des Drehbetätigungselementes 22 drückt nun das Ansteuerungselement 42 das Schaltelement 41 axial in Richtung Mitnehmer 31. In der vorliegenden Ausführungsform ist dies so gelöst, dass das Schaltelement 41 an seiner unteren Stirnseite eine umlaufende Rille 43 aufweist, die an einer Stelle durch einen Steg 44 unterbrochen ist (Fig. 12).

In der Entkopplungsstellung verläuft das Ansteuerungselement 42 in der Rille 43. In einer bestimmten Drehposition beginnt nun der Steg auf das Ansteuerungselement 42 aufzulaufen, wodurch sich das Schaltelement 41 axial nach oben verschiebt. In der Kopplungsstellung liegt das Ansteuerungselement 42 auf dem Steg 44 an und hebt somit das Schaltelement 41 in axialer Richtung an, wodurch auch der Mitnehmer 31 gegen das Antriebselement 50 bzw. die Steuerscheibe 51 gedrückt wird.

Um mit dem Drehbetätigungselement 22 drehbar verbunden zu sein (bzw. zu bleiben) umfasst das Schaltelement 41 axiale Fortsätze 47, die in entsprechende Ausnehmungen des Antriebselementes 50 bzw. der Steuerscheibe 51 ragen. Eine gegenseitige Verdrehung von Schaltelement 41 und Drehbetätigungselement 22 wird dadurch verhindert. Eine axiale Verschiebung des Schaltelementes 41 relativ zum Drehbetätigungselement 22 bzw. Schaltelement 41 bleibt jedoch möglich.

Der Kopplungsmechanismus 30 umfasst eine Feder 36, die den Mitnehmer 31in Richtung der ersten Stellung (Entkopplungsstellung) belastet. Diese ist als Spiralfeder ausgebildet und konzentrisch zum Mitnehmer 31 angeordnet. Der Kopplungsmechanismus 30 umfasst auch eine Feder 46, die das Schaltelement 41 in Richtung der Entkopplungsstellung belastet. Diese ist ebenfalls als Spiralfeder ausgebildet und konzentrisch zum Schaltelement 41 angeordnet. Beide Federn 36, 46 sind als Druckfedern ausgebildet. Die auf den Mitnehmer 31 wirkende Feder 36 ist dabei vorzugsweise innerhalb der auf das Schaltelement wirkenden Feder 46 angeordnet.

Der Kopplungsmechanismus 30 weist in der bevorzugten Ausführungsform eine Rasteinrichtung 60 auf, die in der Entkopplungsstellung das Anzeigeelement 24 mit der Basis 21 verdrehsicher verrastet.

Ein erster Teil der Rasteinrichtung 60 wird dabei durch den Mitnehmer 31 gebildet und ein zweiter Teil der Rasteinrichtung 60, der mit dem ersten Teil der Rasteinrichtung 60 zusammenwirkt, ist in Bezug zur Basis 21 stationär ausgebildet.

Wie aus Fig. 9 ersichtlich umfasst der erste Teil der Rasteinrichtung 60 entlang des Umfanges des Mitnehmers 31 verteilte erste Rastelemente 61. Der zweite Teil der Rasteinrichtung 60 umfasst in Bezug zur Basis stationär ausgebildete zweite Rastelemente 62. Letztere sind an einer Rasthülse 63 ausgebildet, die stationär zur Basis 21 ist und beispielsweise innerhalb des Anzeigeelementes 24 angeordnet ist bzw. vom Anzeigeelement 24 umgeben ist.

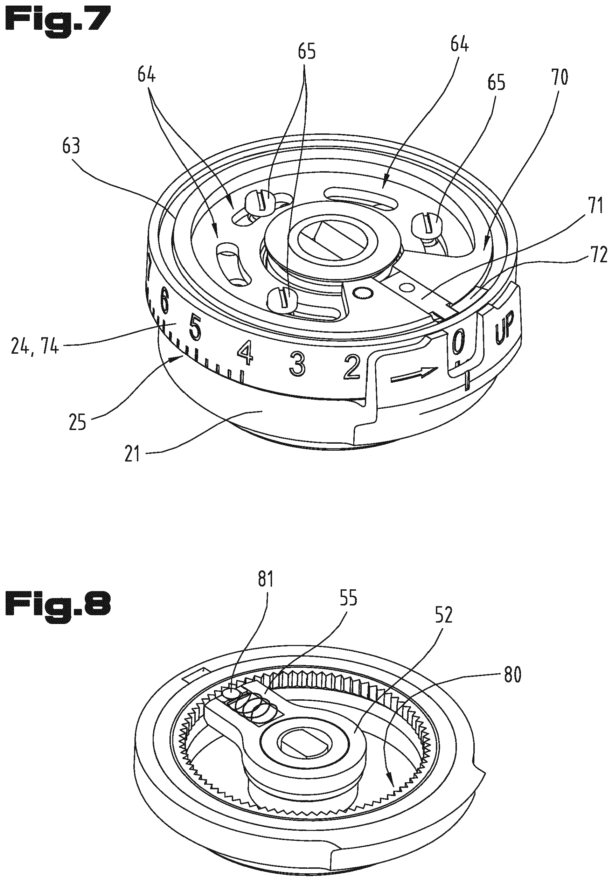

Fig. 8 zeigt eine umlaufende Rastung 80, die im unteren Bereich des Verstellturmes 20 vorgesehen ist im Detail. Diese kleidet die Innenwand einer ringförmigen Ausnehmung aus. Die Drehübertragungsspindel 52 weist im Bereich ihres unteren Endes einen radialen Fortsatz 55 auf, in dem in einer radialen Führung eine Feder gelagert ist, um eine Kugel 81 - möglich wäre auch ein Bolzen - axial nach außen gegen die Rastung 80 drückt. Dieser Mechanismus ermöglicht es dem Nutzer das Ausmaß der durch ihn bewirkten Drehbewegung des Drehbetätigungselementes 22 taktil zu erfassen. Selbstverständlich ist ein solcher Mechanismus nur optional.

Im Folgenden wird der Aspekt eines Anschlagmechanismus anhand der Figuren 3, 7 und 10 näher beschrieben. Im Folgenden wird das bislang als Anzeigeelement 24 bezeichnete Teil des Verstellturmes 20 als Betätigungselement 74 benannt. Diese Vorgangsweise soll der Tatsache Rechnung tragen, dass das Betätigungselement 74 (im Zusammenhang mit dem nachfolgend beschriebenen Anschlagmechanismus) nicht unbedingt auch ein Anzeigeelement sein muss. In der bevorzugten Ausführung ist das Betätigungselement jedoch gleichzeitig ein Anzeigeelement.

Fig. 3 zeigt einen Verstellturm 20 für ein fernoptisches Gerät 1, insbesondere Zielfernrohr, mit einer Basis 21 und einem Drehbetätigungselement 22, das relativ zur Basis 21 um eine Drehachse 100 verdrehbar ist. Dabei ist ein erster Anschlag 71 zu erkennen, der radial nach außen ragt und Teil einer Anschlagpaarung 70 ist. In Fig. 7 ist die gesamte Anschlagpaarung 70 dargestellt, die aus einem ersten Anschlag 71 und einem zweiten Anschlag 72 gebildet ist.

Die Anschläge 71, 72 sind in Fig. 7 in der Anschlagposition dargestellt, in der sie die Drehbewegung des Drehbetätigungselementes 22 begrenzen.

Der Verstellturm 20 weist weiters einen Mechanismus zur Überwindung der Anschlagposition der Anschlagpaarung 70 auf. Dieser Mechanismus umfasst ein von außen zugängliches Betätigungselement 74, das einen der Anschläge (hier den zweiten Anschlag 72) trägt. Alternativ wäre es möglich, dass das Betätigungselement 74 auf andere Weise mit einem der Anschläge 71, 72 zusammenwirkt.

In zumindest einer Drehstellung des Drehbetätigungselementes 22 ist das Betätigungselement 74 relativ zur Basis 21 und relativ zum Drehbetätigungselement 22 bewegbar, sodass durch eine Betätigung des Betätigungselementes 74 ein Anschlag 71 relativ zum anderen Anschlag 72 verschiebbar ist, wodurch die Anschlagposition überwunden wird.

Im vorliegenden Ausführungsbeispiel ist das Betätigungselement 74 in der zumindest einen Drehstellung des Drehbetätigungselementes 22 in Bezug zur Drehachse 100 axial verschiebbar. Dabei ist das Betätigungselement 74 sowohl relativ zur Basis 21 als auch relativ zum Drehbetätigungselement 22 axial verschiebbar.

Der erste Anschlag 71 ist in Bezug zur Basis 21 stationär und als ein in Bezug zur Drehachse 100 radial nach außen ragender Vorsprung, insbesondere ein Stift oder Bolzen, ausgebildet.

Der Mechanismus zur Überwindung der Anschlagposition weist in der bevorzugten Ausführungsform einen Anschlagring 73 (Fig. 10) auf, der den zweiten Anschlag 72 und eine umlaufende Führung 75 ausbildet, in dem der erste Anschlag 71 vor Erreichen oder nach Überwinden der Anschlagposition (je nachdem aus welcher Richtung sich die Anschläge 71, 72 der Anschlagsposition nähern) geführt ist. Nach Erreichen der Anschlagposition muss nun zur Überschreitung der Anschlagposition das Betätigungselement 74 axial verschoben werden. Dadurch werden die Anschläge 71, 72 (in axialer Richtung) gegeneinander verschoben, wodurch ein Weiterdrehen des Drehbetätigungselementes 22 über die Anschlagposition hinaus möglich wird.

Das Betätigungselement 74 ist hülsenförmig ausgebildet und der Anschlagring 73 (Fig. 10) ist in dem Betätigungselement 74 eingesetzt und befestigt, insbesondere verklebt (Fig. 3). Alternativ könnten der zweite Anschlag 72 und die Führung 75 auch einstückig mit dem Betätigungselement 74 ausgebildet sein.

Wie aus Fig. 7 ersichtlich ist der erste Anschlag 71 lösbar mit der Basis 21 verbunden und entlang des Umfanges in verschiedenen Positionen relativ zur Basis 21 befestigbar. Im vorliegenden Beispiel wird dies dadurch gewährleistet, dass der erste Anschlag in einer Hülse (der Rasthülse 63) sitzt, die an ihrer Unterseite um die Drehachse 100 verteilte Langlöcher 64 aufweist. Schrauben 65 fixieren die Hülse 63 in einer bestimmten Position. Durch Lösen der Schrauben 65, Verdrehen der Hülse 63 und anschließendem Fixieren der Hülse 63 in der neuen Position kann der erste Anschlag 71 nach Wunsch eingestellt werden. Dadurch kann die Anschlagposition derart eingestellt werden, dass in der Anschlagposition die Visierlinie entsprechend der Fleckschussentfernung eingestellt ist. Diese Prozedur erfordert das Lösen und Abnehmen des oberen Teiles des Verstellturmes 20. Wie aus Fig. 6 ersichtlich kann dies durch Abnehmen des als Drehkappe ausgebildeten Drehbetätigungselementes 22 und Lösen der (Maden)Schrauben 57 erfolgen.

Im Folgenden wird nochmals kurz erläutert wie das Drehbetätigungselement 22 mit dem zweiten Anschlag 72 zusammenwirkt bzw. diesen mit sich dreht. Dazu ist das Betätigungselement 74 um die Drehachse 100 verdrehbar. Der Verstellturm 20 umfasst einen mechanischen Kopplungsmechanismus 30, über den das Drehbetätigungselement 22 mit dem Betätigungselement 74 zusammenwirkt, wobei der Kopplungsmechanismus 30 derart ausgebildet ist, dass das Betätigungselement 74 in zumindest einer Drehstellung des Drehbetätigungselementes 22 durch das Drehbetätigungselement 22 um die Drehachse 100 verdrehbar ist.

Das Drehbetätigungselement 22 und das Betätigungselement 74 sind in Richtung der Drehachse 100 vorzugsweise übereinander angeordnet.

Der Kopplungsmechanismus 30 ist bevorzugt derart ausgebildet, dass während einer ganzen Umdrehung des Drehbetätigungselementes 22 um die Drehachse 100 das Betätigungselement 74 durch das Drehbetätigungselement 22 nur um einen Drehwinkel, der einem Teil einer ganzen Umdrehung entspricht, relativ zur Basis 21 verdrehbar ist.

In der dargestellten Ausführungsform ist das Betätigungselement 74 mit dem bereits zuvor beschriebenen Anzeigeelement 24 identisch, und somit um die Drehachse 100 verdrehbar. Entlang seines Umfanges weist es zumindest eine von außen sichtbare Markierung 25 auf.

Auf den Kopplungsmechanismus zwischen Drehbetätigungselement 22 und Betätigungselement 24 muss hier nicht mehr näher eingegangen werden, da dieser genauso ausgebildet sein kann wie im Zusammenhang mit dem Drehbetätigungselement 22 und dem Anzeigeelement 24 beschrieben. Alle oben beschriebenen (und eingangs erwähnten) Varianten des Kopplungsmechanismus sind auf die Kopplung zwischen Drehbetätigungselement 22 und Betätigungselement 74 gleichermaßen anwendbar.

Gemäß einem bevorzugten Aspekt der Erfindung ist das Betätigungselement 74 nur in jener Drehstellung des Drehbetätigungselementes 22 bewegbar bzw. betätigbar, die der Anschlagposition der Anschlagpaarung 70 entspricht. Im vorliegenden Fall ist dies dadurch verwirklicht, dass das hülsenförmige Betätigungselement 74 im Bereich seines oberen Randes eine Ausnehmung 19 besitzt, die in einen (nicht dargestellten) Vorsprung des oberen Teils des Verstellturmes 20 fährt, wenn das Betätigungselement 74 axial verschoben wird. In jeder anderen Drehposition verhindert der Vorsprung ein axiales Verschieben des Betätigungselementes 74.

Es ist nicht notwendig, dass das Betätigungselement hülsen- oder ringförmig ausgebildet ist. Vielmehr sind auch Ausführungen denkbar, bei denen das Betätigungselement nicht symmetrisch zur Drehachse 100 ausgebildet ist. Es könnte z.B. ein von außen zugänglicher Stift oder Bolzen sein. Auch schalter- oder knopfartige Betätigungselemente sind denkbar. So werden auch einfache Lösungen als zur Erfindung gehörig betrachtet, bei denen sich z.B. das Betätigungselement nicht mit dem Drehbetätigungselement mit dreht, sondern seine relative Lage zur Basis im Wesentlichen beibehält.

Im Folgenden wird der Aspekt der Übertragung der Drehbewegung des Drehbetätigungselementes 22 in eine translatorische Stellbewegung des Aktorelementes 27 anhand der Figuren 3 und 11 näher beschrieben. Die Drehübertragungsspindel 52 ist drehfest mit dem Drehbetätigungselement 22 verbunden. Das Aktorelement 27 ist im dargestellten Ausführungsbeispiel eine Gewindespindel, die in einem Innengewinde der Basis 21 drehbar gelagert ist. Je nach Gewindesteigung bewirkt die Drehbewegung auch eine translatorische Bewegung des Aktorelementes 27.

Gemäß einer bevorzugten Ausführungsform ist nun zwischen der Drehübertragungsspindel 52 und dem Aktorelement 27 ein Übertragungselement 53 zwischengeschaltet. Auf der dem Aktorelement 27 zugewandten Seite weist das Übertragungselement 53 zwei Schenkel 58 auf. Die zueinander gerichteten Flächen der Schenkel 58 sind im Wesentlichen parallel zueinander und erlauben eine axiale Bewegung des zwischen die Schenkel 58 aufgenommenen Aktorelementes 27. Außerdem übertragen die Schenkel 58 die Drehbewegung auf das Aktorelement 27 (oder ein dem Aktorelement 27 vorgelagertes Element) in Form einer Gewindespindel.

Das Übertragungselement 53 ist drehfest mit der Drehübertragungsspindel 52 verbunden. Auf seiner den Schenkeln 58 abgewandten Seite weist das Übertragungselement 53 an seiner Außenseite eine Verzahnung 11 auf, die in einer entsprechenden Innenverzahnung der Drehübertragungsspindel 52 sitzt. Innen weist das Übertragungselement 53 ein Innengewinde auf. Mit einer Schraube 54 wird das Übertragungselement mit der Drehübertragungsspindel 52 verbunden (Fig. 11).

Im Bereich der Schenkel 58 weist das Übertragungselement 53 an seiner Außenseite einen konisch geformten Abschnitt 59 auf (Fig. 11), wobei sich die Konusform in Richtung der Enden der Schenkel 58 aufweitet. Die Drehübertragungsspindel 52 weist eine entsprechend konisch geformte Innenfläche (Gegenfläche 14) auf. Durch Verschrauben des Übertragungselementes 53 innerhalb der Drehübertragungsspindel 52 mittels der Schraube 54 wird der konisch geformte Abschnitt 59 des Übertragungselementes 53 gegen die konisch geformte Gegenfläche 14 der Drehübertragungsspindel 52 gepresst. Dadurch werden die Schenkel 58 aufeinander zugedrückt und zwängen den oberen Teil des Aktorelementes 27 zwischen sich ein. Um hier eine ausreichende Einzwängkraft zu erreichen ist die Konusform des Übertragungselementes 53 im noch nicht eingebauten Zustand etwas flacher als die Konusform der Gegenfläche 14.

Das Übertragungselement 53 wirkt somit auch als Toleranzausgleich und verhindert, dass ein unerwünschtes Spiel und damit ein Totgang entsteht, wodurch wiederum die Genauigkeit der Einstellung verbessert wird.

**Bezugszeichenaufstellung**

| | | | |
|---|---|---|---|
| 1 | Fernoptisches Gerät | 34 | Führung |
| 2 | Äußeres Gehäuse | 35 | Feder für Mitnehmerstift 33 |
| 3 | Objektiv | 36 | Feder für Mitnehmer 31 |
| 4 | Okular | 40 | Schaltmechanismus |
| 5 | Umkehrsystem | 41 | Schaltelement |
| 6 | Inneres Gehäuse | 42 | Ansteuerungselement |
| 7 | Lager | 43 | Rille |
| 8 | Rückstellmechanismus | 44 | Steg |
| 9 | Optische Achse | 45 | Gleitscheibe |
| 10 | Visierlinie | 46 | Feder für Schaltelement 41 |
| 11 | Verzahnung | 47 | Axialer Fortsatz des Schaltelementes 41 |
| 12 | Loch | | |
| 13 | Öffnung | 50 | Antriebselement |
| 14 | Gegenfläche | 51 | Lochscheibe |
| 19 | Ausnehmung | 52 | Drehübertragungsspindel |
| 20 | Verstellturm | 53 | Übertragungselement |
| 21 | Basis | 54 | Lochschraube |
| 22 | Drehbetätigungselement | 55 | Radiale Führung |
| 23 | Markierung | 56 | Schrauben |
| 24 | Anzeigeelement | 57 | Schrauben |
| 25 | Markierung | 58 | Schenkel |
| 26 | Bezugsmarkierung | 59 | Konisch geformter Abschnitt |
| 27 | Aktorelement | 60 | Rasteinrichtung |
| 28 | Ausnehmung des Anzeigeelementes 24 | 61 | Erste Rastelemente |
| | | 62 | Zweite Rastelemente |
| 29 | Dichtring | 63 | Rasthülse |
| 30 | Kopplungsmechanismus | 64 | Langloch |
| 31 | Mitnehmer | 65 | Schraube |
| 32 | Mitnehmerstruktur | 70 | Anschlagpaarung |
| 33 | Mitnehmerstift | 71 | Erster Anschlag |
| 72 | Zweiter Anschlag | | |
| 73 | Anschlagring | | |
| 74 | Betätigungselement | | |
| 75 | Führung | | |
| 80 | Rastung | | |
| 81 | Kugel | | |
| 82 | Feder für Kugel 81 | | |
| 100 | Drehachse | | |

## Patentansprüche

1. Verstellturm (20) für ein fernoptisches Gerät (1), insbesondere Zielfernrohr, mit
- einer Basis (21),
- einem Drehbetätigungselement (22), das relativ zur Basis (21) um eine Drehachse (100) verdrehbar ist,
- einer Anschlagpaarung (70) aus einem ersten Anschlag (71) und einem zweiten Anschlag (72), die in der Anschlagposition die Drehbewegung des Drehbetätigungselementes (22) begrenzen, und
- einem Mechanismus (74, 73) zur Überwindung der Anschlagposition der Anschlagpaarung (70),
wobei der Mechanismus (74, 73) ein von außen zugängliches Betätigungselement (74) umfasst, das einen der Anschläge (71, 72) trägt oder mit einem der Anschläge (71, 72) zusammenwirkt und in zumindest einer Drehstellung des Drehbetätigungselementes (22) relativ zur Basis (21) und relativ zum Drehbetätigungselement (22) bewegbar ist, sodass durch eine Betätigung des Betätigungselementes (74) ein Anschlag (71) relativ zum anderen Anschlag (72) verschiebbar ist, wodurch die Anschlagposition überwindbar ist, **dadurch gekennzeichnet, dass** die Anschlagposition unabhängig vom Drehbetätigungselement (22) freigegeben werden kann, und dass das Drehbetätigungselement (22) und das Betätigungselement (74) in Richtung der Drehachse (100) übereinander angeordnet sind.

2. Verstellturm nach Anspruch 1, **dadurch gekennzeichnet, dass** das Betätigungselement (74) in der zumindest einen Drehstellung des Drehbetätigungselementes (22) in Bezug zur Drehachse (100) axial verschiebbar ist.

3. Verstellturm nach Anspruch 1 oder 2, **dadurch gekennzeichnet, dass** der erste Anschlag (71) in Bezug zur Basis (21) stationär ist und dass das Betätigungselement (74) den zweiten Anschlag (72) trägt.

4. Verstellturm nach einem der vorhergehenden Ansprüche, **dadurch gekennzeichnet, dass** das Betätigungselement (74) ein Anzeigeelement (24) ist, das um die Drehachse (100) verdrehbar ist und entlang seines Umfanges zumindest eine von außen sichtbare Markierung (25) aufweist.

5. Verstellturm nach einem der vorhergehenden Ansprüche, **dadurch gekennzeichnet, dass** das Betätigungselement (74) nur in jener Drehstellung des Drehbetätigungselementes (22) betätigbar ist, die der Anschlagposition der Anschlagpaarung (70) entspricht.

6. Verstellturm nach einem der vorhergehenden Ansprüche, **dadurch gekennzeichnet, dass** der erste Anschlag (71) lösbar mit der Basis (21) verbunden ist und entlang des Umfanges in verschiedenen Positionen relativ zur Basis (21) befestigbar ist.

7. Verstellturm nach einem der vorhergehenden Ansprüche, **dadurch gekennzeichnet, dass** der erste Anschlag (71) in einer Hülse (63) sitzt.

8. Verstellturm nach einem der vorhergehenden Ansprüche, **dadurch gekennzeichnet, dass** der erste Anschlag (71) ein in Bezug zur Drehachse (100) radial nach außen ragender Vorsprung, insbesondere ein Stift oder Bolzen, ist.

9. Verstellturm nach einem der vorhergehenden Ansprüche, **dadurch gekennzeichnet, dass** der Mechanismus (74, 73) zur Überwindung der Anschlagposition einen Anschlagring (73) aufweist, der den zweiten Anschlag (72) und eine umlaufende Führung (75) ausbildet, in dem der erste Anschlag (71) vor Erreichen oder nach Überwinden der Anschlagposition geführt ist.

10. Verstellturm nach einem der vorhergehenden Ansprüche, **dadurch gekennzeichnet, dass** das Betätigungselement (74) hülsenförmig ausgebildet ist und der Anschlagring (73) in dem Betätigungselement (74) eingesetzt und befestigt, insbesondere verklebt, ist.

11. Verstellturm nach einem der vorhergehenden Ansprüche, **dadurch gekennzeichnet, dass** das Betätigungselement (74) ein Anzeigeelement (24) ist, das um die Drehachse (100) verdrehbar ist und entlang seines Umfanges zumindest eine von außen sichtbare Markierung (25) aufweist, und dass der Verstellturm (20) einen mechanischen Kopplungsmechanismus (30) umfasst, über den das Drehbetätigungselement (22) mit dem Anzeigeelement (24) zusammenwirkt, wobei der Kopplungsmechanismus (30) derart ausgebildet ist, dass das Anzeigeelement (24) in zumindest einer Drehstellung des Drehbetätigungselementes (22) durch das Drehbetätigungselement (22) um die Drehachse (100) verdrehbar ist, **dadurch gekennzeichnet, dass** der Kopplungsmechanismus (30) derart ausgebildet ist, dass während einer ganzen Umdrehung des Drehbetätigungselementes (22) um die Drehachse (100) das Anzeigeelement (24) durch das Drehbetätigungselement (22) nur um einen Drehwinkel, der einem Teil einer ganzen Umdrehung entspricht, relativ zur Basis (21) verdrehbar ist.

12. Fernoptisches Gerät (1), insbesondere Zielfernrohr, mit einem Verstellturm (20), insbesondere zur Verstellung der Visierlinie durch Verstellung zumindest eines optischen Bauteils (3, 5) innerhalb des fernoptisches Gerätes (1), **dadurch gekennzeichnet, dass** der Verstellturm (20) nach einem der vorhergehenden Ansprüche ausgebildet ist.

## Claims

1. An adjustment turret (20) for a long-range optical device (1), in particular a telescopic sight, comprising
- a base (21),
- a rotary control element (22), which can be rotated relative to the base (21) about an axis of rotation (100),
- a stop pair (70) comprising a first stop (71) and a second stop (72), which in the stop position limit the rotational movement of the rotary control element (22), and
- a mechanism (74, 73) for overcoming the stop position of the stop pair (70),
wherein
the mechanism (74, 73) comprises an actuating element (74) which is accessible from the outside and which bears one of the stops (71, 72) or cooperates with one of the stops (71, 72) and in at least one rotational position of the rotary control element (22) can be moved relative to the base (21) and relative to the rotary control element (22), so that by activating the actuating element (74) one stop (71) can be displaced relative to the other stop (72), whereby the stop position can be overcome, **characterized in that** the stop position can be released independently of the rotary control element (22), and that the rotary control element (22) and the actuating element (74) are arranged above each other in the direction of the axis of rotation (100).

2. The adjustment turret as claimed in claim 1, **characterized in that** the actuating element (74) can be displaced axially in relation to the axis of rotation (100) in the at least one rotational position of the rotary control element (22).

3. The adjustment turret as claimed in claim 1 or 2, **characterized in that** the first stop (71) is stationary in relation to the base (21) and that the actuating element (74) bears the second stop (72).

4. The adjustment turret as claimed in one of the preceding claims, **characterized in that** the actuating element (74) is a display element (24) which is rotatable about the axis of rotation (100) and has along its circumference at least one marking (25) visible from the outside.

5. The adjustment turret as claimed in one of the preceding claims, **characterized in that** the actuating element (74) can only be activated in the rotational position of the rotary control element (22) which corresponds to the stop position of the stop pair (70).

6. The adjustment turret as claimed in one of the preceding claims, **characterized in that** the first stop (71) is connected detachably to the base (21) and can be secured along the circumference in different positions relative to the base (21).

7. The adjustment turret as claimed in one of the preceding claims, **characterized in that** the first stop (71) sits in a sleeve (63).

8. The adjustment turret as claimed in one of the preceding claims, **characterized in that** the first stop (71) is a projection protruding radially outwards in relation to the axis of rotation (100), in particular a pin or bolt.

9. The adjustment turret as claimed in one of the preceding claims, **characterized in that** the mechanism (74, 73) for overcoming the stop position comprises a stop ring (73), which forms the second stop (72) and a circumferential guide (75), in which the first stop (71) is guided before reaching or after overcoming the stop position.

10. The adjustment turret as claimed in one of the preceding claims, **characterized in that** the actuating element (74) is configured to be sleeve-like and the stop ring (73) is inserted and secured, in particular adhered, in the actuating element (74).

11. The adjustment turret as claimed in one of the preceding claims, **characterized in that** the actuating element (74) is a display element (24) which can be rotated about the axis of rotation (100) and has along its circumference at least one marking (25) that is visible from the outside, wherein the adjustment turret (20) comprises a mechanical coupling mechanism (30), by means of which the rotary control element (22) cooperates with the display element (24), wherein the coupling mechanism (30) is configured such that in at least one rotational position of the rotary control element (22) the display element (24) can be rotated about the axis of rotation (100) by the rotary control element (22) **characterized in that** the coupling mechanism (30) is configured such that during a full rotation of the rotary control element (22) about the axis of rotation (100) the display element (24) can be rotated by the rotary control element (22) relative to the base (21) only about an angle of rotation which corresponds to a part of a full rotation.

12. A long-range optical device (1), in particular a telescopic sight, comprising an adjustment turret (20), in particular for adjusting the line of sight by adjusting at least one optical component (3, 5) inside the long-range optical device (1), **characterized in that** the adjustment turret (20) is configured as claimed in one of the preceding claims.

## Revendications

1. Tour de réglage (20) pour un appareil de télé-optique (1), en particulier une lunette de visée, avec
- une base (21),
- un élément d'actionnement rotatif (22) qui peut être tourné autour d'un axe de rotation relativement à la base (21),
- un appariement de butée (70) composé d'une première butée (71) et d'une deuxième butée (72) qui, dans la position de butée, limitent le mouvement rotatif de l'élément d'actionnement rotatif (22), et
- un mécanisme (74, 73) destiné à surmonter la position de butée de l'appariement de butée (70),
le mécanisme (74, 73) comprenant un élément d'actionnement (74) accessible à partir de l'extérieur qui porte l'une des butées (71, 72) ou qui coopère avec l'une des butées (71, 72) et qui peut être déplacé dans au moins une position de rotation de l'élément d'actionnement rotatif (22) relativement à la base (21) et relativement à l'élément d'actionnement rotatif (22) de telle sorte que, du fait d'un actionnement de l'élément d'actionnement (74), une butée (71) peut coulisser relativement à l'autre butée (72), ce qui fait que la position de butée peut être surmontée,
**caractérisée en ce que**
la position de butée peut être libérée indépendamment de l'élément d'actionnement rotatif (22), et **en ce que** l'élément d'actionnement rotatif (22) et l'élément d'actionnement (74) sont disposés l'un au-dessus de l'autre dans la direction de l'axe de rotation (100).

2. Tour de réglage selon la revendication 1, **caractérisée en ce que** l'élément d'actionnement (74) peut coulisser axialement dans la position de rotation au moins au nombre de un de l'élément d'actionnement rotatif (22) par rapport à l'axe de rotation (100).

3. Tour de réglage selon la revendication 1 ou 2, **caractérisée en ce que** la première butée (71) est stationnaire par rapport à la base (21) et **en ce que** l'élément d'actionnement (74) porte la deuxième butée (72).

4. Tour de réglage selon l'une des revendications précédentes, **caractérisée en ce que** l'élément d'actionnement (74) est un élément d'affichage (24) qui peut être tourné autour de l'axe de rotation (100) et présente le long de sa périphérie au moins un repère (25) visible à partir de l'extérieur.

5. Tour de réglage selon l'une des revendications précédentes, **caractérisée en ce que** l'élément d'actionnement (74) ne peut être actionné que dans la position de rotation de l'élément d'actionnement rotatif (22) qui correspond à la position de butée de l'appariement de butée (70).

6. Tour de réglage selon l'une des revendications précédentes, **caractérisée en ce que** la première butée (71) est raccordée de façon détachable à la base (21) et peut être fixée le long de la périphérie dans différentes positions relativement à la base (21).

7. Tour de réglage selon l'une des revendications précédentes, **caractérisée en ce que** la première butée (71) est située dans une douille (63).

8. Tour de réglage selon l'une des revendications précédentes, **caractérisée en ce que** la première butée (71) est une saillie, en particulier une broche ou un boulon, qui dépasse radialement vers l'extérieur par rapport à l'axe de rotation (100).

9. Tour de réglage selon l'une des revendications précédentes, **caractérisée en ce que** le mécanisme (74, 73) destiné à surmonter la position de butée présente une bague de butée (73), qui constitue la deuxième butée (72) et un guidage (75) périphérique, dans laquelle la première butée (71) est guidée avant d'atteindre la position de butée ou après l'avoir surmontée.

10. Tour de réglage selon l'une des revendications précédentes, **caractérisée en ce que** l'élément d'actionnement (74) est constitué en forme de douille, et la bague de butée (73) est introduite et fixée, en particulier collée, dans l'élément d'actionnement (74).

11. Tour de réglage selon l'une des revendications précédentes, **caractérisée en ce que** l'élément d'actionnement (74) est un élément d'affichage (24) qui peut être tourné autour de l'axe de rotation (100) et présente, le long de sa périphérie, au moins un repère (25) visible à partir de l'extérieur, et **en ce que** la tour de réglage (20) comprend un mécanisme d'accouplement (30) mécanique par le biais duquel l'élément d'actionnement rotatif (22) coopère avec l'élément d'affichage (24), le mécanisme d'accouplement (30) étant constitué de telle sorte que l'élément d'affichage (24), dans au moins une position de rotation de l'élément d'actionnement rotatif (22), peut être tourné par l'élément d'actionnement rotatif (22) autour de l'axe de rotation (100), **caractérisé en ce que** le mécanisme d'accouplement (30) est constitué de telle sorte que, pendant une rotation complète de l'élément d'actionnement rotatif (22) autour de l'axe de rotation (100), l'élément d'affichage (24) ne peut être tourné relativement à la base (21) par l'élément d'actionnement rotatif (22) que selon un angle de rotation qui correspond à une partie d'une rotation complète.

12. Appareil de télé-optique (1), en particulier lunette de visée, avec une tour de réglage (20), en particulier pour le réglage de la ligne de visée par le réglage d'au moins un composant (3, 5) optique à l'intérieur de l'appareil de télé-optique (1), **caractérisé en ce que** la tour de réglage (20) est constituée selon l'une des revendications précédentes.
